(19) Europäisches Patentamt / European Patent Office / Office européen des brevets

(11) **EP 4 200 530 B1**

(12) **EUROPÄISCHE PATENTSCHRIFT**

(45) Veröffentlichungstag und Bekanntmachung des Hinweises auf die Patenterteilung:
**02.04.2025  Patentblatt 2025/14**

(21) Anmeldenummer: **21844346.3**

(22) Anmeldetag: **23.12.2021**

(51) Internationale Patentklassifikation (IPC):
***B64C 3/30*** *(2006.01)*

(52) Gemeinsame Patentklassifikation (CPC):
**B64C 3/56; B64C 3/30; B64C 37/00; B64U 30/12**

(86) Internationale Anmeldenummer:
**PCT/EP2021/087511**

(87) Internationale Veröffentlichungsnummer:
**WO 2022/179743 (01.09.2022 Gazette 2022/35)**

(54) **TEXTILE TRAGFLÜGELSTRUKTUR FÜR EIN FLÜGELSYSTEM SOWIE TRANSPORTGERÄT**

TEXTILE WING STRUCTURE FOR A WING SYSTEM AND TRANSPORT DEVICE

STRUCTURE TEXTILE D'AILE PORTEUSE POUR UN SYSTÈME D'AILE ET APPAREIL DE TRANSPORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.02.2021  DE 102021104663**

(43) Veröffentlichungstag der Anmeldung:
**28.06.2023  Patentblatt 2023/26**

(73) Patentinhaber: **Thorwald, Bastian**
**90419 Nürnberg (DE)**

(72) Erfinder: **Thorwald, Bastian**
**90419 Nürnberg (DE)**

(74) Vertreter: **Stippl, Hubert**
**Stippl Patentanwälte**
**Freiligrathstraße 7a**
**90482 Nürnberg (DE)**

(56) Entgegenhaltungen:
**CN-A- 1 847 089       CN-U- 206 231 175**
**DE-A1- 102015 014 319   DE-A1- 19 907 791**
**US-A- 4 725 021       US-A1- 2005 151 007**
**US-A1- 2006 060 706    US-A1- 2020 010 209**
**US-B1- 10 676 172     US-B1- 6 508 036**
**US-B2- 9 216 813**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Flügelsystem gemäß dem Oberbegriff des Anspruchs 1. Ferner betrifft die vorliegende Erfindung ein Transportgerät gemäß dem Oberbegriff des Anspruchs 13.

Technologischer Hintergrund

Es gibt aktuelle Bestrebungen den Individualverkehr vom Lande in die Luft zu erweitern. Hierfür sind Flugtaxis, auch autonom fliegende bekannt. Diese haben allerdings zum Nachteil, dass diese keinen Familien-PKW ersetzen.

Um einen möglichst schnellen und komfortablen Punkt-zu-Punkt Individualverkehr über größere Distanzen für eine ganze Familie mit demselben Transportmittel zu ermöglichen, sind bestimmte Kriterien an ein flugfähiges Familien-Auto zu stellen. Ein Sitzplatzangebot für mindestens vier Personen, eine mögliche Zuladung, welche ausreichend ist für vier Personen inklusive Gepäck. Zudem ist eine Flug-Reichweite von über 300 km erstrebenswert. Die Alltagstauglichkeit sollte gegeben sein, so dass die Benutzung eines normalen Parkhauses oder einer Waschstraße möglich ist. Das flugfähige Auto sollte idealerweise einen PKW im Alltag vollwertig ersetzen können, so dass keine doppelten Anschaffungskosten notwendig werden. Um eine maximale aerodynamische Effizienz und einen damit verbundenen minimalen Verbrauch zu gewährleisten, ist ein Starrflügler die bevorzugte Wahl. Es ist wünschenswert, dass ein Flug-Auto Eigenschaften zum Kurzstart und -landung (STOL (englisch: "Short Take-Off & Landing")) bietet, so dass die Anzahl der nutzbaren Flugplätze maximiert wird.

Diese Anforderungen schließen bereits einige Konzepte aufgrund grundsätzlicher Merkmale aus. Neben den STOL-Eigenschaften gibt es Flugautos mit Eigenschaften zum vertikalen Starten (VTOL (englisch: "vertical take off and landing")). VTOL-Eigenschaften sind allerdings von nachrangiger Bedeutung, da zum einen Außenstarts und -landungen außerhalb von Flugplätzen und Firmengeländen in Deutschland nicht erlaubt sind. In anderen Ländern, wie z.B. der Schweiz oder Frankreich, kann dies erlaubt sein. Selbst mit einem VTOL-fähigen Fluggerät ist es für Start und Landung notwendig, einen Flughafen anzusteuern. An einem Flughafen bietet die VTOL-Eigenschaft jedoch kaum einen Vorteil zur STOL-Eigenschaft. Eine VTOL-Eigenschaft erfordert generell eine komplexere Technik und eine höhere Motorleistung als ein horizontaler Start (HTOL (englisch: "Horizontal Take Off & Landing")). Das ist jedoch im Reiseflug nur nachteilig, reduziert die Reichweite und erhöht zudem die Betriebs-, Unterhalts-, Wartungs- und Anschaffungskosten.

Die meisten bekannten Konzepte für Flugautos können oder dürfen nicht auf normalen Straßen fahren. Da ein Flugtaxi nicht überall starten und landen kann, erfüllt es die Anforderung für einen "komfortablen Punkt-zu-Punkt Individualverkehr über größere Distanzen für die ganze Familie mit demselben Transportmittel" nicht. Somit ist ein Auto wünschenswert, welches in einfacher Weise zu einem Starrflügler umgebaut werden kann. Es sollte allerdings im fahrbereiten Zustand wie ein normaler PKW genutzt werden können. Bekannte Konzepte eignen sich nicht als alltagstaugliche Familien-PKW. Der Hauptgrund für die Unzulänglichkeiten der existierenden Starrflügel-Konzepte im Fahrmodus ist die Unterbringung der Tragflächen.

Nächstliegender Stand der Technik

In der US 4,725,021 wird ein aufblasbarer Flügel offenbart, der aus einem Paar sich verjüngender, konischer aufblasbarer Schläuche gebildet wird, die tangential miteinander verbunden sind. Die Schläuche sind außerdem durch obere und untere Verstärkungsbretter miteinander verbunden, die entsprechende Längskanten haben, die in der gleichen zentralen Durchmesserebene liegen, die durch den zugehörigen Schlauch verläuft. Die Verstärkungsbretter bestehen aus einem steifen Verstärkungsmaterial, wie z.B. Kevlar, das beim Entleeren der Schläuche in einer Richtung parallel zur Spannweitenachse des Flügels zusammenklappbar ist. Das steife Verstärkungsmaterial wirkt mit den aufgeblasenen Schläuchen zusammen, um die durch den Aufblasdruck verursachte Zugspannung von den Schläuchen auf die Verstärkungsplatten übertragen wird. Eine Vielzahl von starren Bögen, die so geformt sind, dass sie eine Tragflächendefinition ergeben, sind entlang der Spannweitenachse voneinander beabstandet und mit den oberen und unteren Verstärkungsplatten verbunden. Zur Stabilisierung der Bögen entlang ihrer Hinter- und Vorderkanten werden Zugseile verwendet.

Die WO 002017076498 A1 beschreibt ein Luftfahrzeug, welches eine Rumpfeinheit und eine aufblasbare Tragflächeneinheit umfasst, welche im nicht aufgeblasenen Zustand in der Rumpfeinheit angeordnet ist und durch Aufblasen aus der Rumpfeinheit heraus in eine Tragflächenstellung positionierbar ist. Die Tragflächeneinheit ist im nicht aufgeblasenen Zustand in die Rumpfeinheit eingerollt und durch Aufblasen aus der Rumpfeinheit ausrollbar.

In der CN1847089A wird eine Flügelstruktur mit aufgeblasenen Kunststoffstäben als Flügel beschrieben, welcher gasgefüllte Stäbe umfasst, die die Steuerung der Steuerklappen-Stellung ermöglicht. Hierfür werden sechs gasgefüllte Stäbe an der Verbindung zwischen Flügel und Steuerklappe beschrieben, wobei drei an der Oberseite und drei an der Unterseite vorgesehen sind, so dass durch Aufblasen der Stäbe auf einer Seite und Ablassen des Gases aus den Stäben auf der gegenüberliegenden Seite die Stellung der Steuerklappe in Richtung der abgelassenen Stäbe einstellbar ist.

Aus der US 10,676,172 B1 ist eine mit Pressluft aufblasbare Flügelstruktur für ein Flugzeug bekannt, welche aus einer gefalteten Verstau-Position heraus in eine Einsatz-Position aufblasbar ist. Die Flügelstruktur umfasst voneinander beabstandete, mit Pressluft befüllbare Sparren als tragende Struktur. Die Flügelstruktur dient zur Vergrößerung der Flügelfläche beim Landevorgang des Flugzeugs.

Die US 3,473,761 lehrt ein Flugzeug mit einer pneumatisch, also mit einem Gas, befüllten Flügelstruktur zur Verbesserung des Verhältnisses von Festigkeit zu Gewicht. Hierzu weist der Flügel eine Vielzahl geschlossener Schläuche auf, die starr in der Flügelstruktur fixiert, zueinander beabstandet in Längsrichtung der Flügelstruktur angeordnet sind.

Aus der US 2006/0060706 A1 ist eine aufblasbare Struktur aus flexiblem Material bekannt, die in einem entleerten und gelagerten Zustand ein minimales Volumen im Vergleich zu ihrer vollständig aufgeblasenen und entfalteten Konfiguration einnehmen kann, und die eine ausreichende strukturelle Steifigkeit hat, um im entfalteten Zustand als Flügel zu funktionieren. Der Flügel umfasst eine Reihe von aufblasbaren Kammern mit allgemein kreisförmigem Querschnitt. Die Kammern sind in einem bestimmten Abstand zueinander angeordnet und werden von einer äußeren Flügelhaut in diesem Abstand gehalten. Bei Kammern mit gleichem Querschnitt ist dieser Abstand geringer als der Durchmesser. Wenn die Kammern aufgeblasen werden, bewirkt der enge Abstand eine Spannung in den gegenüberliegenden Oberflächen, so dass eine starre Struktur entsteht. Eine Ausführungsform der vorliegenden Erfindung umfasst ein Luftfahrzeug. Das Luftfahrzeug hat mindestens einen aufblasbaren Flügel, der eine Anordnung von tragflächenförmigen aufblasbaren Kammern und mindestens zwei gegenüberliegende Flächen hat, die die Anordnung und Mittel zum Aufblasen der Kammern begrenzen. Die Mittel zum Aufblasen der Kammern umfassen einen Verteiler, der ein Fluid an die aufblasbaren Kammern verteilt. Das Fluid umfasst ein unter Druck stehendes Gas, das durch mindestens einen Kompressor, eine chemische Reaktion oder einen pyrotechnischen Gasgenerator erzeugt wird, oder eine Flüssigkeit, die einen flexiblen Schaum erzeugt.

Die US 6,508,036 B1 betrifft eine leichte Vorrichtung, die eine lineare Betätigung durch das kontrollierte Aufblasen eines entfaltbaren Rohrs ermöglicht und die es erlaubt, dass das entfaltbare Ende des Rohrs in einer linearen Bewegung durch ein Joch herausgeführt wird. Eine Rahmenbaugruppe am Entfaltungsende des Rohrs kann so konfiguriert werden, dass sie mit einer Vielzahl von Komponenten verbunden werden kann, die linear entfaltet werden sollen. Die lineare Betätigungsvorrichtung kann eine starre, nicht kreisförmige Endkappe und ein nicht kreisförmiges Joch umfassen. Innere Holme erleichtern die Annäherung an die nicht kreisförmige Querschnittsform des Rohrs. Ferner ist ein entfaltbarer Raumfahrtrahmen, der gemäß einer anderen bevorzugten Ausführungsform der vorliegenden Erfindung konstruiert ist, offenbart. Der Raumfahrtrahmen umfasst eine verpackbare, entfaltbare und versteifbare Rahmenbaugruppe, eine verpackbare, entfaltbare und aufblasbare Rahmenbaugruppenhülle, die um die Rahmenbaugruppe herum angeordnet ist, Mittel zum Befestigen der Rahmenbaugruppenhülle an der Rahmenbaugruppe und eine Hüllen-Aufblasvorrichtung. Die Rahmenbaugruppe besteht aus einer Vielzahl miteinander verbundener dünnwandiger, versteifbarer Verbundstoffstreben, die eine Reihe miteinander verbundener Kastenrahmen bilden, und hat eine polygonale Querschnittsform. In einer Ausführungsform umfasst die Rahmenbaugruppe erste, zweite und dritte Längsträger, die sich von einem Basisende der Baugruppe zu einem Spitzenende der Baugruppe erstrecken, sowie eine Vielzahl von Verbindungsstreben, die die ersten, zweiten und dritten Längsträger miteinander verbinden, so dass eine dreieckige Querschnittskonfiguration der Streben entsteht. Die Streben können je nach der erforderlichen strukturellen Festigkeit aus verschiedenen Konstruktionsmaterialien und in verschiedenen Formen bestehen. In einer bevorzugten Ausführungsform sind die Streben dünnwandige Verbundlaminatrohre aus einem duroplastischen oder thermoplastischen Material mit einer Wandstärke, die von den strukturellen Anforderungen der spezifischen Anwendung bestimmt wird. Die Mittel zur Befestigung der Rahmenbaugruppenhülle an der Rahmenbaugruppe dienen dazu, die Streben mit der Innenfläche der Rahmenbaugruppenhülle zu verbinden. Diese Verbindungen erleichtern das ordnungsgemäße Verpacken und Entfalten der Rahmenbaugruppenhülle, wenn die Rahmenbaugruppe verpackt und entfaltet wird. Geeignete Mittel zur Befestigung der Rahmenbaugruppenhülle an der Rahmenbaugruppe umfassen Laschen, die an der Innenfläche der Rahmenbaugruppenhülle und an der Rahmenbaugruppe befestigt sind. Die Laschen können z. B. durch Verkleben und/oder Vernähen angebracht werden.

Die DE 199 07 791 A1 offenbart ein Kraftfahrzeug mit Fluggestell, wobei ein Tragflügel, der die Größe der Grundfläche des Kraftfahrzeuges hat, mit einem linken und rechten Rahmen über dem Kraftfahrzeug angeordnet ist und mit dem Kraftfahrzeug über vier Tragrohre fest verbunden ist. Am Tragflügel sind ein linker und rechter Seitenflügel angeordnet, die im Flug ausgefahren und während der Straßenfahrt übereinander eingefahren sind. An dem Motor des Kraftfahrzeugs ist ein Kompressor über eine Kardanwelle angekuppelt. Über die beiden hinteren Tragrohre wird die Druckluft des Kompressors direkt aus der Düse des Tragflügels ausgeblasen. Im ausgefahrenen Zustand sind die Seitenflügel fest mit den Rahmen verbunden. In den beiden vorderen Tragrohren sind die Bowdenzüge und die pneumatischen und elektrischen Steuerleitungen zum Flügel untergebracht. Ein über dem hinteren Reifen angeordneter Druckluftspeicher wird für die Steuerluft, zur Konstanthaltung des Fahrzeuginnendruckes und für die Luftansaugung des Motors verwendet.

Aus der CN 206 231 175 U ist ein Antriebssystem für ein fliegendes Fahrzeug bekannt, welches einen Motor, einen elektrischen Generator, eine Energiespeichervorrichtung sowie eine Flugantriebsanordnung umfasst, wobei die Energiespeichervorrichtung mindestens einen Superkondensator umfasst. Wenn das fliegende Fahrzeug fährt, erzeugt der Motor mechanische Energie, wobei der Generator unter Verwendung der vom Motor erzeugten mechanischen Energie Elektrizität erzeugt, und die Energiespeichervorrichtung kann den Superkondensator mit der vom Generator erzeugten elektrischen Energie aufladen. Wenn das fliegende Fahrzeug den Flug beginnt, versorgt die Energiespeichervorrichtung die Flugantriebsanordnung, um den Flugantrieb mit Energie zu versorgen und das fliegende Fahrzeug anzutreiben. Der Superkondensator ist ein elektrochemisches Element, das durch Polarisierung des Elektrolyten gespeichert wird. Der Superkondensator ist eine Art zwischen dem traditionellen Kondensator und der Batterie und stützt sich hauptsächlich auf die doppelte elektrische Schicht und den Redox-Fake-Kondensator, um die elektrische Energie zu speichern. Im Prozess der Superkondensator-Energiespeicherung ist der Energie-Speicher-Prozess reversibel, so dass der Superkondensator wiederholt geladen und entladen werden kann.

Die US 2020/010209 A1 beschreibt ein batterieelektrisches Luftfahrzeug, dessen Wärmehaushalt über die - im Wesentlichen auf seine beiderseitigen Flügel verteilte - Tragfläche regulierbar ist. Das Luftfahrzeug weist hierzu neben einer für den Antrieb genutzten Hochvolt-Batterie Wärmeleitelemente auf, welche die Batterie thermisch derart mit der Tragfläche verbinden, dass die im Flugbetrieb in der Batterie entstehende Wärme sich möglichst gleichmäßig auf die Tragfläche verteilt. Die im Flug stark umströmte Tragfläche fungiert auf diese Weise als Wärmetauscher.

## Aufgabe der vorliegenden Erfindung

Die Aufgabe der vorliegenden Erfindung besteht darin, eine neuartige verstaubare Flügelstruktur sowie ein Transportgerät zur Verfügung zu stellen, welche eine vergleichbare Tragfähigkeit bei gleichzeitig erhöhter Betriebssicherheit und verringertem Stauraum-Volumen ermöglichen.

## Lösung der Aufgabe

Die vorstehende Aufgabe wird durch die gesamte Lehre des Anspruchs 1 sowie durch ein Transportgerät gemäß Anspruch 13 gelöst. Zweckmäßige Ausgestaltungen der Erfindung sind in den Unteransprüchen beansprucht.

In einer typischen Struktur eines Tragflügels finden sich ein oder mehrere Holme, Beplankung (Haut), Rippe und Stringer. Die Struktur eines textilen Tragflügels ist im Prinzip dieselbe. Im Stand der Technik sind vor allem mit Gas befüllte Druckschläuche bekannt. Dies erlaubt jedoch keine hohen Drücke, weil ein platzender Schlauch ein hohes Gefahrenpotential aufweist und selbst eine Schutzausrüstung für Menschen in unmittelbarer Nähe keinen ausreichenden Schutz bieten kann.

Gegenstand der Erfindung ist eine rein textile Struktur, die in der Lage ist, alle auf die Tragfläche eines Flugzeuges wirkenden Kräfte aufzunehmen. Sie kann insbesondere als Holm für die Tragfläche eines Flugzeuges verwendet werden. Diese Holme bestehen aus einer Anordnung einzelner Druckkammern, insbesondere in Form eines Bündels von textilen Schläuchen, die mit einer Flüssigkeit, wie beispielsweise Wasser, unter hohem Druck gefüllt und mit zugfesten und dehnungsarmen Bändern so verbunden sind, so dass der Verbund hohe Momente, proportional zum Druck in den Schläuchen, aufnehmen kann. Ein Tragflügel enthält einen oder mehrere dieser Holme bzw. Druckkammern zur Lastaufnahme. Um ein formstabiles Flügelprofil zu erreichen, werden vorzugsweise zusätzlich mehrere Druckkammern bzw. Druckschläuche verwendet, die die Aufgabe der Rippen und Stringer übernehmen. Eine textile Hülle um alle tragenden und formgebenden Schläuche bildet die glatte Oberfläche des Flügels. Bei einem flüssigkeitsgefüllten Schlauch besteht ein viel geringeres Gefahrenpotential als bei einem gasgefüllten Schlauch bei gleichem Druck. Versagt ein flüssigkeitsgefüllter Schlauch, tritt aufgrund der geringen Kompressibilität bzw. Inkompressibilität der Flüssigkeit und der geringen Dehnung des Druckschlauchs nur eine geringe Menge Flüssigkeit aus. Diese wird durch die Außenhülle des Hauptflügels "aufgefangen", so dass sie keine Gefahr für Personen darstellt.

Erfindungsgemäß ist ein Flügelsystem vorgesehen, welches eine verstaubare, aerodynamische Flügelstruktur mit mindestens einer druckdichten röhrenförmigen Druckkammer aus einem flexiblen Material, die sich vorzugsweise entlang der Spannweite der Flügelstruktur erstreckt, eine reißfeste Außenhaut-Bespannung, welche die Flügelstruktur umhüllt, und ein Hochdruck-Pumpensystem umfasst, wobei kennzeichnenderweise die mindestens eine Druckkammer der Flügelstruktur mit einer inkompressiblen Flüssigkeit befüllbar ist, wobei die inkompressible Flüssigkeit unter Hochdruck über $5,0 \times 10^6$ Pascal, in der Druckkammer gehalten wird.

Vorteilhafterweise kann die inkompressible Flüssigkeit über $1,0 \times 10^7$ Pascal oder über $1,5 \times 10^7$ Pascal in der Druckkammer gehalten werden.

Zweckmäßigerweise wird die Druckkammer mit dem maximalen Druck beaufschlagt, für den das Material der Druckkammer vorgesehen ist. Somit kann die Druckkammer mit einem Druck beaufschlagt werden, der etwas unterhalb des Berstdruckes der Druckkammer liegt.

Die jeweilige Druckkammer ist insbesondere röhrenförmig, d. h. z. B. als Schlauch, ausgebildet.

Mehrere Druckkammern können im befüllten Zustand nebeneinander und/oder übereinander verlaufend angeordnet sein. Hierdurch wird ein geeignetes Traggerüst für die Flügelstruktur geschaffen.

Zur Gewährleistung einer guten Stabilität der Flügelstruktur bei gleichzeitig guter Aufrollbarkeit- bzw. Faltbarkeit derselben können die Druckkammern vorzugsweise mittels, vorzugsweiser textiler, Zugbänder gegeneinander fixiert bzw. im befüllten Zustand verspannt sein. Zudem ist diese Ausgestaltung was die Herstellbarkeit anbelangt vergleichsweise einfach zu realisieren.

Ferner können zur Gewährleistung einer verbesserten Stabilität der Flügelstruktur manche Druckkammern quer zur Spannweite der Flügelstruktur sowie weitere Druckkammern (23) mäanderförmig oder zickzackförmig in Richtung quer zur Spannweite entlang der Flügelstruktur verlaufen.

Zur Lagefixierung der Druckkammern vorzugsweise in Richtung quer zur Spannweite entlang der Flügelstruktur im unbefüllten sowie befüllten Zustand der Flügelstruktur können Druckkammern abschnittsweise über Spannfäden miteinander verbunden sein. Hierdurch kann vor allem die Flächenstabilität der Flügelstruktur im entfalteten Zustand verbessert werden. Spannfäden haben den Vorteil, dass sie beim Aufroll- bzw. Faltvorgang der Flügelstruktur diesen nicht stören.

Eine röhrenförmige Druckkammer kann beispielsweise die Form eines Schlauches aufweisen bzw. ein Schlauch sein. Sofern eine Mehrzahl von Druckkammern in der Flügelstruktur angeordnet ist, können vorteilhafterweise getrennte Flüssigkeitskreise für die einzelnen Druckkammern vorgesehen sein.

Die tragenden Elemente eines Flügels sind die Holme bzw. Druckkammern. Bei einem einseitig eingespannten Krag-Balken aus Vollmaterial liegt bei einer Belastung des freien Endes auf der Lastseite eine Zugkraft und auf der gegenüberliegenden Seite eine Druckkraft an. Bei einem flüssigkeitsgefüllten Schlauch nimmt die Flüssigkeit die Druckkraft auf und die Fasern auf der Lastseite die Zugkraft. Das trifft aber nur eingeschränkt auf einen einzelnen Schlauch zu, da es zunächst zu einer Parallelogramm-Verschiebung des Gewebes kommt, bei der bei geringen Auslenkungen nur geringe Gegenkräfte auftreten. Der Grund dafür ist, dass sich die Fläche eines Parallelogramms ausgehend von einem Rechteck bei kleiner Verschiebung nur wenig verkleinert. Bei einem Schlauch, dessen Innenvolumen näherungsweise konstant bleibt, weil er mit einer inkompressiblen Flüssigkeit gefüllt ist, werden folglich die Schuss-Fasern, welche in Umfangsrichtung verlaufen, gedehnt. Dies geschieht allerdings nur geringfügig bei geringer Auslenkung. Demensprechend gering ist auch die Fähigkeit eines einzelnen Druckschlauches, ein Moment aufzunehmen.

Um einen Widerstand gegen eine Parallelogramm-Verschiebung zu haben, kann für den Holm ein Bündel aus beispielsweise vier parallelen hochdruckfesten Schläuchen vorgesehen sein. Es ist vorteilhaft, jeweils zwei übereinander liegende Schläuche nur abschnittsweise in aneinander anschließenden Segmenten mit Bändern zu verspannen oder mit einem Gewebe zu umhüllen, welches mindestens zwei Fadensysteme aufweist, die in einem Winkel von 45° zur Längsachse des Holmes verlaufen. Bei dieser Verspannung ist es auch unerheblich, ob der Holm aus insgesamt vier, sechs oder mehr Schläuchen besteht, da diese jeweils paarweise verbunden sind.

Um die Momentaufnahme weiter zu erhöhen, können zusätzlich noch Bänder in Längsrichtung des Holms angebracht werden, die ein Stück weit auf der Ober- bzw. der Unterseite parallel geführt sind und ab einer bestimmten Spannweiten-Position schräg nach unten bzw. oben geführt werden und auf der gegenüberliegenden Seite befestigt werden. Von diesen Bändern können mehrere über die Länge des Holms verteilt werden. Diese Anordnung hat zur Folge, dass die Bänder selbst bei einer geringen Auslenkung bereits stark auf Zug belastet werden und somit den Widerstand gegen eine Auslenkung vergrößern. Darüber hinaus verringern beispielsweise mehrere parallele Bänder auf der Ober- und Unterseite nahe der Einspannung am Auto die Dehnung auf der zugbelasteten Seite. Auf diese Weise kompensieren sie die Druckkraft des Wassers durch eine gleich große Zugkraft im Fall einer Auslenkung. Dadurch können das Schlauchbündel zusammen mit den Bändern vorteilhafterweise eine Momentaufnahme ermöglichen, die proportional zum Wasserdruck im Inneren der Schläuche ist.

Die theoretisch maximale Querkraft *Fmax,* die ein Druckschlauch bei vollständiger Entlastung einer

$$F_{max} = \frac{F_D\,b}{2h}$$

Seite aufnehmen kann, beträgt . Mit der Druckkraft der Flüssigkeit $F_D = p\,A$ gleich dem Produkt aus Druck *p* und Schlauchquerschnittsfläche *A*, der Höhe des Holms b und dem Hebel der angreifenden Kraft *h*.

In der Realität können sich die Bänder dehnen, was zu einer Verschlechterung der Momentaufnahme führt. Sind die Bänder auf der Ober- und der Unterseite im unausgelenkten Zustand des Flügels bereits durch die Druckkraft des Wassers gedehnt, führt eine Auslenkung des Flügels nicht sofort zu einer vollständigen Entlastung des Bandes auf der lastabgewandten Seite. Die effektive Zugkraft auf der Lastseite reduziert sich folglich um die Zugkraft, die noch auf der lastabgewandten Seite anliegt. Je geringer die Dehnung der Bänder ist, desto näher kommt man bei geringer Auslenkung der theoretisch maximalen Querkraft $F_{max}$.

Rippen oder Längsspante des Tragflügels können bei einem textilen Flügel vorteilhafterweise ebenfalls aus Druckschläuchen und Spannbändern bestehen. Der mittlere Holm ist der Hauptholm. Dieser trägt den größten Teil der Luftkräfte, die bei einem Flügel bei einem Viertel der Flügeltiefe angreifen. Falls es die Lasten erfordern können zusätzlich ein vorderer und/oder hinterer Holm eingefügt werden. Allerdings tragen der vordere und hintere Holm zusammen nur einen kleineren Teil der Last und dienen in erster Linie der Formstabilität des Profils.

Zur Formgebung der Flügelnase können Druckkammern bzw. Schläuche verwendet, die mit Luft niedrigen Drucks gefüllt sind. Da sich diese Schläuche sehr nah an der Mittelebene des Flügels befinden, ist der Hebelarm sehr gering. Aus diesem Grund können sie kaum zur Aufnahme der Luftkräfte beitragen. Deswegen wird für diese aufgrund des geringeren Gewichts und der geringen Anforderung an die Steifigkeit Luft als Druckmedium verwendet. Das Druckniveau liegt zweckmäßigerweise im Bereich von $3,0\times10^5$ Pascal bis $5,0\times10^5$ Pascal, so dass dieses in einem ungefährlich niedrigen Bereich liegt. Der Druckschlauch an der Nase ist mit noch geringerem Druck befüllt, da dieser zweckmäßigerweise keinen runden Querschnitt aufweist, um das Profil an der Nase des Flügels abzubilden. Um mit dieser Anordnung einen definierten Nasenradius zu erzielen, kann es erforderlich sein, die luftgefüllten Druckkammern bzw. Schläuche in ein grobmaschiges Netz zu stecken, welches im gespannten Zustand die gewünschte Form ergibt.

Zweckmäßigerweise kann das Flügelsystem eine Flügelklappe umfassen, welche druckdichte röhrenförmige Druckkammern aus einem flexiblen Material umfasst, wobei die Flügelklappe mit zugfesten Bändern an der Flügelstruktur befestigt ist, wobei die Bänder senkrecht zu den Holmen von der Hinterkante der Flügelstruktur zur Vorderkante der Flügelklappe verlaufen, derart dass sich ein Spalt zwischen der Hinterkante der Flügelstruktur und der Vorderkante der Flügelklappe bildet, wobei in diesem Spalt parallel zur Hinterkante der Flügelstruktur mindestens zwei Aktuator-Druckkammern, vorzugsweise in Form von Druckschläuchen, angeordnet sind, wobei mindestens eine Aktuator-Druckkammer oberhalb und mindestens eine Aktuator-Druckkammer unterhalb der Bänder angeordnet ist.

Als Aktuatoren für aerodynamische Steuerklappen, beispielsweise für das Querruder und/oder die Landeklappe, können flüssigkeitsgefüllte Druckkammern bzw. Druckschläuche verwendet werden. Die Aktuatoren für die Betätigung der Klappen sind zweckmäßigerweise bei der vorliegend beschriebenen Bauweise der Flügelstruktur ebenfalls aufrollbar gestaltet. Die Klappen sind mit zugfesten Bändern befestigt, die in Längsrichtung des Flügels, also in Richtung des Vortriebs, von der Hinterkante des Flügels zur Vorderkante der Klappe verlaufen, so dass ein Spalt zwischen der Hinterkante und der Vorderkante bleibt. In diesem Spalt parallel zur Hinterkante des Flügels sind mindestens zwei Niederdruckschläuche, angeordnet, wobei mindestens ein Niederdruckschlauch oberhalb und mindestens ein weiterer unterhalb der Befestigungsbänder angeordnet ist. Sie können den Spalt vollständig ausfüllen, wenn beide halb mit Flüssigkeit befüllt sind. Die Aktuator-Druckkammern sind zweckmäßigerweise mit Flüssigkeit befüllbar und mittels Flüssigkeitsdrücken ansteuerbar. Sofern ein Druckunterschied der Flüssigkeiten in der oberen und der unteren Aktuator-Druckkammer angelegt wird, neigt sich die Flügelklappe in Richtung der Aktuator-Druckkammer mit geringerem Flüssigkeitsdruck. Wenn beispielsweise eine Klappe nach unten ausgeschlagen werden soll, wird Flüssigkeit von der unteren in die obere Aktuator-Druckkammer bzw. vom unteren in den oberen Schlauch gepumpt. Dadurch verringert sich die Dicke der unteren Aktuator-Druckkammer und die der Oberen vergrößert sich, was die Klappe nach unten drückt. Vorteilhaft an dieser Ansteuerung ist auch, dass die Aktuator-Druckkammern entlang der gesamten Vorderkante der Klappe verlaufen, weswegen nur ein geringer Druck erforderlich ist, um im ausgelenkten Zustand das durch die Luftkräfte entstehende Moment an der Aufhängung zu kompensieren.

Vorzugsweise kann das Flügelsystem einen Stauraum für die Flügelstruktur umfassen, wobei die Flügelstruktur im leeren Zustand im Stauraum positionierbar ist, und die Flügelstruktur im befüllten Zustand aus dem Stauraum heraus in eine Tragflächenstellung positionierbar ist. Sofern alle Druckkammern entleert sind, ist die gesamte Tragfläche aufroll- bzw. faltbar und hat nur noch eine geringe Dicke, beispielsweise von etwa 2 cm, und benötigt in diesem Zustand somit wenig Stauraum. Aus Sicherheitsgründen kann ein Gesamtrettungssystem, welches beispielsweise einen Fallschirm umfasst, im Flügelsystem vorgesehen sein. Dieser kann zweckmäßigerweise im Stauraum in der Nähe der Schwerpunktlage des Fluggerätes untergebracht sein.

Die wesentlichen Eigenschaften der vorliegenden Erfindung umfassen eine faltbare Struktur, die in einem relativ dünnen Gehäuse auf dem Dach eines Flug-Autos in mehrere Lagen zusammengelegt oder aufgerollt verstaut werden. Eine sinnvolle Konfiguration kann ein Hochdecker sein. Diese Struktur ermöglicht die aerodynamisch effizienteste Starrflügler-Konfiguration und folglich geringstmöglichen Verbrauch im Flug. Weiterhin bietet es eine hohe Ausfallsicherheit durch getrennte Hochdruck-Flüssigkeitskreise für jeden Schlauch. Der textile Flügel besitzt eine hohe Schadenstoleranz, da er sich wieder mit uneingeschränkter Tragfähigkeit entfaltet, nachdem er z.B. durch eine Böe geknickt wurde. Im Fahrmodus zeichnet sich das Flügelsystem durch ein geringes Gewicht aus. Es können ebenfalls textile Steuerklappen in den Flügel integriert werden. Die Belastbarkeit kann z.B. durch einen veränderlichen Querschnitt der Schläuche über der Länge an unterschiedliche Anforderungen angepasst werden. Als Druckmedium bietet sich eine inkompressible Flüssigkeit an, da diese kaum expandiert, wenn ein Schlauch platzt. Selbst wenn in den Schläuchen sehr hohe Drücke, von insbesondere über $1,5\times10^7$ Pascal , vorliegen, expandiert die Flüssigkeit somit kaum beim Versagen einer Druckkammer bzw. eines Schlauches. Würde ein luftgefüllter Schlauch mit demselben Druck platzen, wäre das in weitem Umkreis inakzeptabel gefährlich. Allerdings ziehen sich die überdehnten Fasern des Gewebeschlauches wieder zusammen, wenn der Druck sinkt. Daher kann es trotzdem zu einem strahlförmigen Flüssigkeitsaustritt kommen. Diese Wasser-Jets eines platzenden Schlauchs können jedoch vorteilhafterweise von der Bespannung aufgehalten werden, die den gesamten Flügel umhüllt. Aus diesem Grund kann es sinnvoll sein, die Bespannung aus einem reißfesteren Material zu fertigen, als üblicherweise verwendet wird, beispielsweise aus einer reißfesten synthetischen Faser. Hierbei bieten sich z. B. Aramide an, insbesondere Kevlar. Eine mit Flüssigkeit gefüllte Druckkammer bzw. ein Druckschlauch bietet somit vorteilhafterweise eine höhere Betriebssicherheit für Personen in der Nähe als gasgefüllte Druckkammern bzw. Druckschläuche. Ferner schränkt die Integration der für das Fliegen erforderlichen Technik die Nutzung als "normalen" Familien-PKW nicht ein.

Vorteilhafterweise kann das Flügelsystem einen Leitwerkträger umfassen, wobei der Leitwerkträger auf der Höhe der halben Tiefe der Flügelstruktur drehbar gelagert sein kann.

Selbst das Gewicht des nicht befüllten Tragflügels kann noch so hoch sein, dass es nicht von jeder Person beim Aufbau komfortabel gehandhabt werden kann. Deswegen kann eine lasttragende Aufbauhilfe erforderlich werden. Der Leitwerkträger kann vorteilhafterweise als Aufbauhilfe für den Tragflügel dienen. Der Leitwerkträger kann zu diesem Zweck teilbar ausgeführt sein und in der Mitte des Fahrzeugs etwa auf der Höhe der halben Flügeltiefe drehbar gelagert sein. Durch die Teilbarkeit entlang der Längsachse des Leitwerkträgers kann jeweils eine Hälfte für eine Flügelstruktur auf der jeweiligen Seite des Transportmittels als Aufbauhilfe verwendet werden. Der Leitwerkträger kann zweckmäßigerweise ein nach unten offenes U-Profil aufweise, das in drei Segmenten teleskopartig ineinander gefahren werden kann, wobei im Spalt des U-Profils ein Schlitten in Längsrichtung verschiebbar eingebaut sein kann. An diesem kann zweckmäßigerweise ein Träger befestigt werden, der durch ein Rohr an der Flügelspitze geführt werden kann und gegen Verdrehen gesichert befestigt werden kann. Dieses Rohr erstreckt sich entlang der Achse des aufgerollten Flügels. Nachdem der Träger eingeführt ist, fährt dieser den seitlich ausgestellten Leitwerkträger entlang in Richtung Flügelspitze. Erreicht der Träger den Ort der Flügelabstützung, wird diese als weitere Unterstützung befestigt. Sobald die Flügelstruktur komplett ausgerollt ist, kann diese mit einer inkompressiblen Flüssigkeit befüllt werden und unter Druck gesetzt werden, so dass die Flügelstruktur ihr Eigengewicht selbst tragen kann. Im Anschluss kann der Träger der Aufbauhilfe abgebaut und verstaut werden. Der Leitwerkträger kann ebenfalls nach hinten, entgegen der Vorwärtsrichtung des Transportgeräts geklappt werden und mit Bolzen mit der anderen Hälfte des Leitwerkträgers der anderen Flügel-Seite verbunden werden. Nachdem die Abstützungen des Leitwerkträgers unter dem Unterboden des Autos nach hinten herausgezogen und am Leitwerkträger befestigt wurden, kann das Leitwerk ausgerollt werden. Aus Gewichtsgründen und aufgrund geringerer Spannweite und geringerer Luftkräfte kann das Leitwerk luftbefüllt sein. Hierfür kann ein Kompressor vorgesehen sein, der aufgrund seiner Größe ebenfalls im Endstück des Leitwerkträgers untergebracht werden kann. Dies bietet den Vorteil, dass die Konstruktion deutlich erleichtert wird, da keine Notwendigkeit besteht, dass Flüssigkeit entlang des Leitwerkträgers transportiert wird. Somit kann der Hochdruck-Kreislauf der Flüssigkeit so kompakt wie möglich gehalten werden.

Umgekehrt kann die Flügelstruktur zweckmäßigerweise vor dem Einrollen evakuiert werden. Anschließend wird die Aufbauhilfe in das Rohr an der Flügelspitze eingeführt und gegen Verdrehen gesichert. Es kann ein Elektromotor vorgesehen sein, der an dem Rohr der Aufbauhilfe angebracht ist und dafür sorgt, dass die Flügelstruktur eingerollt wird, während der Schlitten am Leitwerkträger Richtung Flügelwurzel fährt.

Ferner kann es vorgesehen sein, dass in eine erste röhrenförmige Druckkammer des Flügelsystems eine zweite röhrenförmige Druckkammer mit kleinerem Durchmesser koaxial zur ersten Druckkammer eingebracht ist, so dass in der zweiten Druckkammer ein höherer Flüssigkeitsdruck als in der ersten Druckkammer anliegt. Durch die Verwendung von doppelwandigen Druckkammern bzw. Druckschläuchen kann vorteilhafterweise eine unzureichende Druckfestigkeit einer Druckkammer bzw. eines Druckschlauches kompensiert werden. Sofern in eine Druckkammer bzw. in einen Druckschlauch, welche für einen Druck von $p_{max}$ ausgelegt ist, eine ebenso druckfeste zweite Druckkammer bzw. ein zweiter Druckschlauch mit etwas kleinerem Durchmesser koaxial eingeführt, kann die innere Druckkammer bzw. der innere Druckschlauch mit dem doppelten des Maximaldrucks, also $2 \cdot p_{max}$, beaufschlagt werden. Hierfür ist es lediglich notwendig, dass in dem kleinen Spalt zwischen beiden Druckkammern bzw. Druckschläuchen der Maximaldruck $p_{max}$ anliegt, da der maximale Differenzdruck über jede Wand der Druckkammern bzw. der Druckschläuche jeweils den Maximaldruck $p_{max}$ nicht überschreiten darf.

Nebengeordnet beanspruch die vorliegende Erfindung ein Transportgerät, zur Verwendung als Fluggerät für die Fortbewegung in der Luft und als Fahrzeug für die Fortbewegung zu Lande, wobei das Transportgerät ein Flügelsystem gemäß einem der Ansprüche 1 bis 5 umfasst, welches vorzugsweise auf der Oberseite des Transportgeräts angebracht ist.

Die Anordnung des erfindungsgemäßen Flügelsystems auf einem Transportgerät für die Fortbewegung zu Lande, insbesondere auf einem Automobil, bietet den Vorteil, dass die STOL-Fähigkeit in einfacher Weise vorliegt. Im Vergleich zu konventionellen Flugzeugen liegt ein verhältnismäßig großes Fahrwerk vor, welches zusätzlich angetrieben werden kann. Dieses kann zur Beschleunigung des Transportgeräts beim Start beitragen, um somit schneller die Abhebegeschwindigkeit zu erreichen. Die Bremsanlage eines Automobils, insbesondere mit einem ABS-System, erlaubt aufgrund der im Vergleich zu den Reifen eines Kleinflugzeuges großen und profilierten Auflagefläche der PKW-Reifen ein schnelleres Verzögern nach dem Landen.

Vorteilhafterweise können konventionelle Verbrennungsmotoren für das Fahren zu Lande und zum Fliegen verwendet werden. In einer Ausgestaltung kann beispielsweise ein Propeller mit einem Verbrennungsmotor betrieben werden.

Zweckmäßigerweise kann im Transportgerät mindestens ein Behälter für die Flüssigkeit des Flügelsystems in Bodennähe bezüglich des Untergrunds bei der Fortbewegung zu Lande, insbesondere in der dem Untergrund zugewandten Hälfte des Transportgeräts, angeordnet sein, vorzugsweise in der zum Flügelsystems entgegengesetzten Hälfte des Transportgeräts, wobei der mindestens eine Behälter zur Aufnahme der Flüssigkeit während des Betriebs als Fahrzeug für die Fortbewegung zu Lande hergerichtet ist und das Flügelsystem zur Aufnahme der Flüssigkeit während des Betriebs als Fluggerät für die Fortbewegung in der Luft hergerichtet ist. Ferner kann das Transportgerät ein Pumpensystem umfassen, zum Pumpen der Flüssigkeit aus dem mindestens einen Behälter in das Flügelsystem. Um die notwendige Flüssigkeitsmenge weiter reduzieren zu können, kann beispielweise durch die Verwendung hochzugfester Fasern ein höherer Flüssigkeitsdruck angelegt werden, der wiederum einen kleineren Querschnitt der Druckkammer bzw. des Druckschlauches erlaubt.

Vorteilhafterweise kann das Transportgerät in einer Ausgestaltung mindestens einen Elektromotor zur Fortbewegung umfassen sowie eine Redox-Flow Batterie als Energieträger umfassen, welche ein Elektrolyt umfasst, wobei der Elektrolyt in die mindestens eine Druckkammer der Flügelstruktur des Flügelsystems unter Hochdruck gemäß Anspruch 1 befüllbar ist. Zweckmäßigerweise kann das Transportgerät mindestens einen Elektromotor umfassen zur Fortbewegung. Dieser kann beispielsweise hergerichtet sein, um ein Umschalten der Kraftübertragung auf die Achse der Reifen zur Fortbewegung zu Lande oder auf mindestens einen Propeller für eine Fortbewegung im Flugantrieb zu ermöglichen.

Besonders vorteilhaft kann es sein, dass der Elektrolyt aus einem Anolyt und einem Katholyt besteht, und das Transportgerät mindestens zwei getrennte bodennahe Behälter sowie mindestens zwei Druckkammern im Flügelsystem umfasst, wobei getrennte Flüssigkeitskreise für die Druckkammern vorgesehen sind, so dass für den Anolyt bzw. den Katholyt jeweils mindestens ein Behälter bzw. mindestens eine Druckkammer vorgesehen ist.

Alternativ kann auch eine Redox-Flow Batterie zum Einsatz kommen, bei der lediglich ein flüssiger Elektrolyt (Anolyt) zum Einsatz kommt und der Reaktionspartner Luft (z.B. Umgebungsluft) ist. Beispielsweise handelt es sich hierbei um eine Vanadium Sauerstoff Redox-Flow Batterie.

Zweckmäßigerweise kann der Anolyt als Druckmedium für eine Flügelstruktur und der Katholyt als Druckmedium einer zweiten anderen Flügelstruktur verwendet werden. Alternativ besteht ebenso die Möglichkeit, dass bei Vorhandensein einer Mehrzahl von Druckkammern innerhalb einer Flügelstruktur, diese Druckkammern mit Anolyt oder Katholyt befüllt werden können, so dass innerhalb einer Flügelstruktur, also eines Flügels auf einer Seite des Transportgeräts, Anolyt und Katholyt aufnehmbar ist. Somit kann beispielsweise ein Ungleichgewicht in der Menge bzw. des Gewichts zwischen Anolyt und Katholyt ausgeglichen werden.

Ferner können, sofern lediglich ein einziger Elektrolyt (Anolyt) vorhanden ist, getrennte Druckbereiche bzw. getrennte Flügelstrukturen lediglich mit dem einzigen Elektrolyten befüllt sein.

Damit das Druckmedium gleichzeitig als Energiequelle für die Redox-Flow Batterie verwendet werden kann, ist es vorteilhaft, dass Druckmedium im Betrieb austauschbar ist. Hierfür können jeweils zwei vertikal übereinanderliegende Druckschläuche eines Holms an der Flügelspitze verbunden werden. Sie bilden damit ein liegendes U, so dass der Elektrolyt an der Flügelwurzel in einen der Druckschläuche hineingepumpt werden kann und aus dem andern wiederum an der Flügelwurzel austritt. Würden z.B. zwei nebeneinanderliegende Schläuche auf der Unter- oder Oberseite eines Holms verbunden sein, der insgesamt aus vier Schläuchen besteht, könnte der Holm beinahe seine gesamte Tragfähigkeit bei Versagen eines Schlauchpaars verlieren. Würde dagegen der Druck in zwei übereinanderliegenden Schläuchen absinken, verliert der Holm nur die Hälfte seiner Tragfähigkeit. Zur Versorgung der galvanischen Zelle mit Elektrolyt werden nacheinander einzeln alle in U-Formen zusammengeschlossenen Druckschläuche aller Holme geöffnet und so lange durchströmt, bis der Elektrolyt komplett ausgetauscht ist. Zweckmäßigerweise ist immer nur eine U-Form offen, während die anderen geschlossen sind, um bei einem Druckabfall im Elektrolyt-Kreislauf nur die Tragfähigkeit dieses Teils des Holms einzubüßen. Anschließend werden die Ventile einer U-Form geschlossen und die der nächsten U-Form geöffnet. Vorteilhafterweise können auch die dünneren Druckschläuche der Rippen und/oder Stringer Bestandteil dieses Kreislaufs sein. Für die Aktuatoren der Klappen kann zweckmäßigerweise ebenfalls Elektrolyt als Arbeitsmedium verwendet werden, welches allerdings im Flug nicht am Austausch teilnimmt, weil dies zu aufwendig und zu riskant sein kann. Es bietet den Vorteil, dass es als Reserve-Energie nach dem Landen betrachtet werden kann.

Um den Anforderungen an ein Flug-Auto gerecht zu werden, dass für ein Fahrzeug ein tiefer Schwerpunkt und für ein Fluggerät ein hoher Schwerpunkt erforderliche ist, kann vorteilhafterweise ein flüssiger Energieträger verwendet werden. Der flüssige Energieträger darf allerdings nicht verbraucht werden, so dass dessen Volumen über die gesamte Flugdauer als Druckmedium zur Verfügung steht. Dieser kann im Fahrbetrieb in bodennahe Tanks gepumpt werden und im Flugbetrieb als Druckmedium für die textilen Flügel verwendet werden.

Dies ist insbesondere für eine Ausgestaltung als Schulterdecker vorteilhaft. Das für die Flügelstrukturen benötigte Volumen an Flüssigkeit kann sich vorteilhafterweise mit der Menge an Elektrolyt decken, das aufgrund der erforderlichen Kapazität benötigt wird. Es kann beispielsweise eine Menge von etwa 500 Liter vorgesehen sein.

Zudem kann der Elektrolyt zweckmäßigerweise nicht brennbar und nicht explosiv sein. Ferner können auch Elektrolyte vorgesehen sein, die unproblematisch für die Umwelt sind. Ein weiterer Vorteil ist, dass ein Elektrolyt je nach Situation entweder aufgeladen oder ausgetauscht werden kann. Der Elektrolyt kann also beispielsweise in einfacher Weise getankt werden. Dies kann selbst bei geringer Reichweite kurze Tankstopps ermöglichen.

Dadurch, dass keine zusätzliche Flüssigkeit, wie beispielsweise Wasser für die Flügel erforderlich ist, ergibt sich als weiterer Vorteil eine mögliche Reduzierung des Gewichts und damit einhergehend eine Erhöhung der möglichen Nutzlast. Ferner trägt der Elektrolyt im Flügel, im Gegensatz zu einem Akku im Fahrzeug, vorteilhafterweise auch nicht zum besonders kritischen Moment an der Flügelwurzel bei.

Besonders vorteilhaft ist es, dass die Flüssigkeit im Flüssigkeitskreis der Druckkammer zusätzlich als Kühlflüssigkeit innerhalb eines Kühlkreislaufes einbringbar ist, wobei die Flügelstruktur als Wärmetauscher verwendbar ist. Hierfür können die Druckkammern der Flügelstruktur einen Teil des Kühlkreislaufes bilden. Die große Flügeloberfläche eignet sich zur Abgabe der Wärme, die darüber hinaus zur Enteisung der Tragfläche beiträgt. Je nach thermischer Stabilität des Elektrolyten kann dieser alternativ vorteilhafterweise ebenfalls als Kühlflüssigkeit, beispielsweise für Elektromotoren, verwendet werden. Hierfür kann ein geschlossener Hochdruck-Kreislauf mit Wärmetauscher am Erzeuger vorgesehen sein.

<u>Beschreibung der Erfindung anhand von Ausführungsbeispielen</u>

Zweckmäßige Ausgestaltungen der vorliegenden Erfindung werden anhand von Zeichnungsfiguren nachstehend näher erläutert. Es zeigen:

Fig. 1a-h    Einzelschritte für den Umbau eines Transportgeräts vom Fahrzeug zum Fluggerät;

Fig. 2    schematische Schnittdarstellung einer Flügelstruktur;

Fig. 3a-b    schematische Detaildarstellung einer Flügelstruktur im Querschnitt;

Fig. 4a-b    schematische Darstellung der Auslenkung der Steuerklappen mit Aktuator-Druckkammern;

Fig. 5    schematische Draufsicht auf eine Flügelstruktur;

Fig. 6a-b    schematische Darstellung der Verspannung der Holm-Druckkammern mit Spannfäden;

Fig. 7a-d    schematische Darstellung der Verspannung der Druckkammern mit Zugbändern;

Fig. 8a-b    schematische Darstellung des Anschlusses der Flügelabstützung an der Flügelstruktur;

Fig. 9    Diagramm des experimentell ermittelten Maximalmoments eines Holms in Abhängigkeit der Auslenkung; und

Fig. 10a-b    Auslegungsrechnung zur Umsetzung des Flügelsystems an ein Transportgerät.

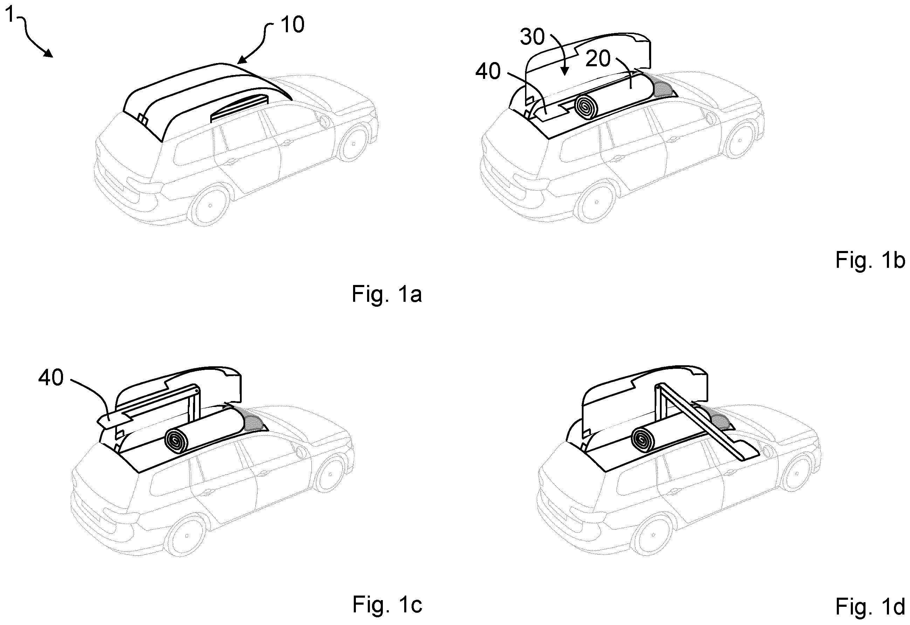

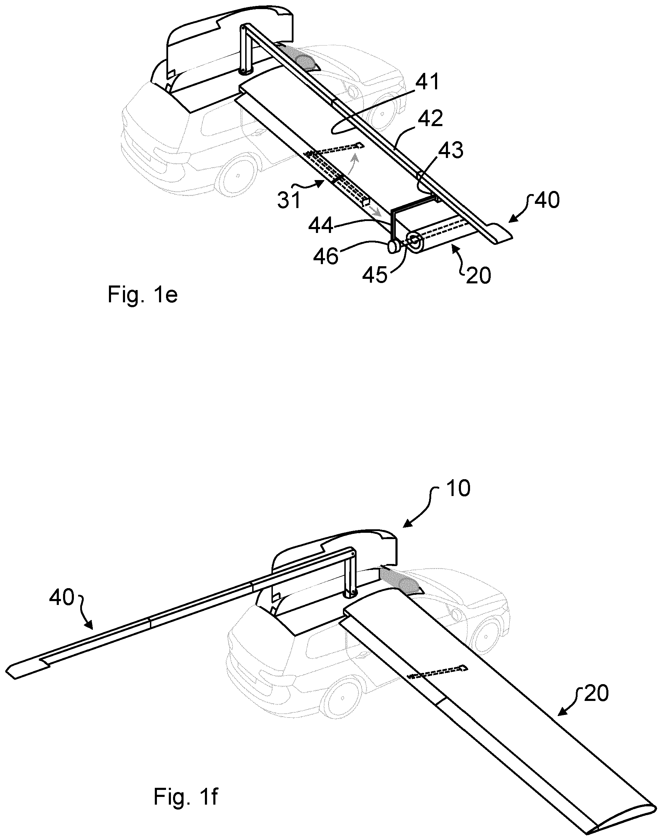

In Fig. 1a wird das Flügelsystem 10 im montierten Zustand auf einem Transportgerät 1 gezeigt. Das in Fig. 1b dargestellte Flügelsystem umfasst einen Stauraum 30, in welchem die Flügelstruktur 20 in einem ungefüllten und aufgerollten Zustand untergebracht ist. Im Stauraum 30 ist zudem ein Leitwerkträger 40 untergebracht. Dieser kann wie in Fig. 1c gezeigt, aus dem Stauraum 20 nach oben geschwenkt werden und anschließend herausgeschwenkt werden. Im vollständig eingeklappten Zustand liegt der kurze, in Fig. 1c gezeigte vertikale Teil des Leitwerksträgers 40 horizontal auf dem Dach des Transportgeräts 1. Dieser zeigt vom Befestigungspunkt in der Mitte des Dachs nach vorne bis zum Gelenk, an dem die drei Teleskop-Stücke des Leitwerksträgers 40 beginnen. Der Leitwerkträger 40 umfasst einen Luft-Kompressor und einen Leitwerk-Aktuator. Der Leitwerkträger 40 ist drehbar gelagert und ist in Fig. 1d im ausgeschwenkten Zustand gezeigt, so dass dieser parallel zur Hauptachse der Flügelstruktur 20 ausgerichtet ist. Der Leitwerkträger 40 dient während des Aufbaus der Flügelstruktur 20 als Kran zur Montagehilfe und ist zu diesem Zweck teilbar ausgeführt sowie in der Mitte des Fahrzeugs 1 etwa auf der Höhe der halben Flügeltiefe drehbar gelagert. Der Leitwerkträger 40 besteht aus zwei verbindbaren Hälften, so dass für jede Flügelseite eine Hälfte des Leitwerkträgers 40 als Montagehilfe zur Verfügung steht.

Der Leitwerkträger 40 besteht aus einem nach unten offenen U-Profil, das in drei Segmente 42 teleskopartig ineinander gefahren werden kann. Das Endstück der Flügelstruktur 20, die als Hauptflügel dient, enthält eine Aufnahme 45 in Form eines Rohres für die Montagehilfe. Die Montagehilfe umfasst einen Elektromotor 46 zum Auf- und Abrollen, einen Träger 44 und einem Schlitten 43, der von unten in den Teleskop-Leitwerkträger 40 eingehängt wird. Das Gewebe der Flügelstruktur 20 sollte beim Auf- und Abbau weder die Seite des Fahrzeugs 1 beschädigen, noch auf dem Boden schleifen. Der Schlitten 43 ist in Längsrichtung verschiebbar eingebaut. An diesem wird ein Träger 44 befestigt, den man durch eine Aufnahme 45 an der Flügelspitze führen kann und gegen Verdrehen gesichert befestigen kann. Diese Aufnahme befindet sich entlang der Auf- und Abroll-Achse der aufgerollten Flügelstruktur 20. Nachdem der Träger 44 eingefädelt ist, fährt dieser den seitlich ausgestellten Leitwerkträger 40 in Richtung Flügelspitze. Zudem ist eine Flügelabstützung 31 vorgesehen. Sobald der Schlitten 43 mit dem befestigten Träger 44 und der Aufnahme 45 die Höhe der Flügelabstützung 31 erreicht, wird diese als weitere Unterstützung befestigt.

Sobald die Flügelstruktur 20 komplett ausgerollt ist, wird diese mit einer inkompressiblen Flüssigkeit befüllt und unter Druck gesetzt, so dass die Flügelstruktur 20 ihr Eigengewicht selbst trägt. Anschließend wird der Träger 44 der Aufbauhilfe abgebaut und verstaut. In Fig. 1f ist der Leitwerkträger 40 nach hinten geklappt dargestellt, so dass dieser in Rückwärts-Richtung des Transportgeräts 1 zeigt. Der Leitwerkträger 40 wird mittels Bolzen mit der Hälfte des Leitwerkträgers 40 der anderen Seite verbunden.

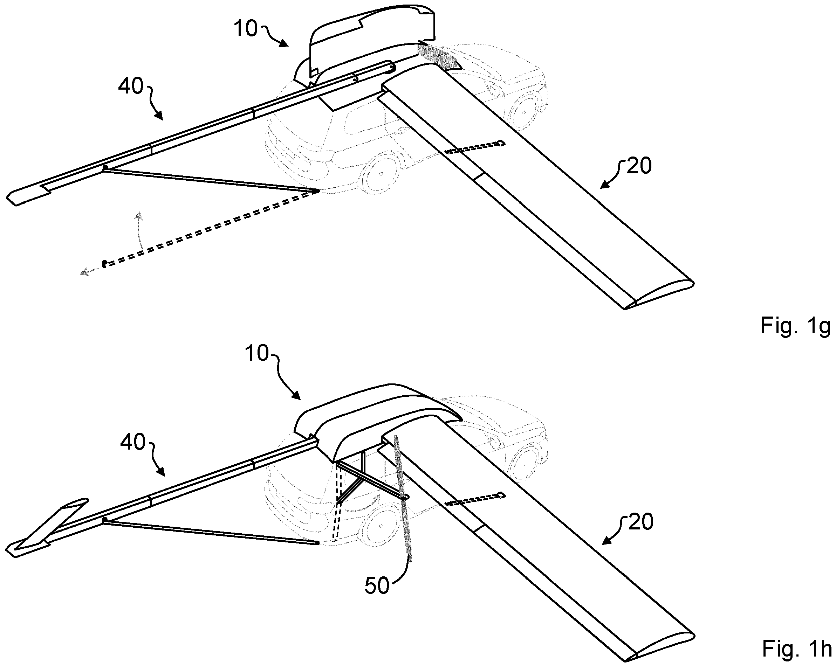

In Fig. 1g ist dargestellt, wie Abstützungen des Leitwerkträgers unter dem Unterboden des Transportgeräts 1 nach hinten herausgezogen und am Leitwerkträger 40 befestigt werden. Das Leitwerk kann als V-Leitwerk ausgestaltet sein. Aufgrund der geringeren Spannweite und den geringeren Lasten besteht dieses nur aus Druckluft-befüllten Schläuchen. Im nicht entfalteten Zustand befindet es sich eingerollt in der Box, die auch die Aktuatoren enthält. In Fig. 1h ist das Leitwerk ausgerollt und aufgepumpt gezeigt. Ebenfalls ist ein Propeller 50 vorgesehen, welcher beispielsweise als zweiblättriger Schubpropeller 50 ausgestaltet sein kann. Dieser ist faltbar und im PKW-Modus wird der Träger in die gestrichelt angedeutete Ausbuchtung geklappt. Der Propeller 50 selbst wird zusammengefaltet in eine Aussparung quer zum Fahrzeug 1, horizontal zum Boden hinter der Stoßstange untergebracht.

Umgekehrt wird die Flügelstruktur 20 vor dem Einrollen evakuiert, um eine möglichst geringe Packungsgröße zu erreichen. Anschließend wird der Träger 44 in die Aufnahme 45 an der Flügelspitze 20 eingeführt und gegen Verdrehen gesichert. Danach sorgt der Elektromotor 46 an der Aufnahme 45 des Trägers 44 dafür, dass die Flügelstruktur 20 eingerollt wird, während der Schlitten 43 am Leitwerkträger 40 Richtung Flügelwurzel fährt.

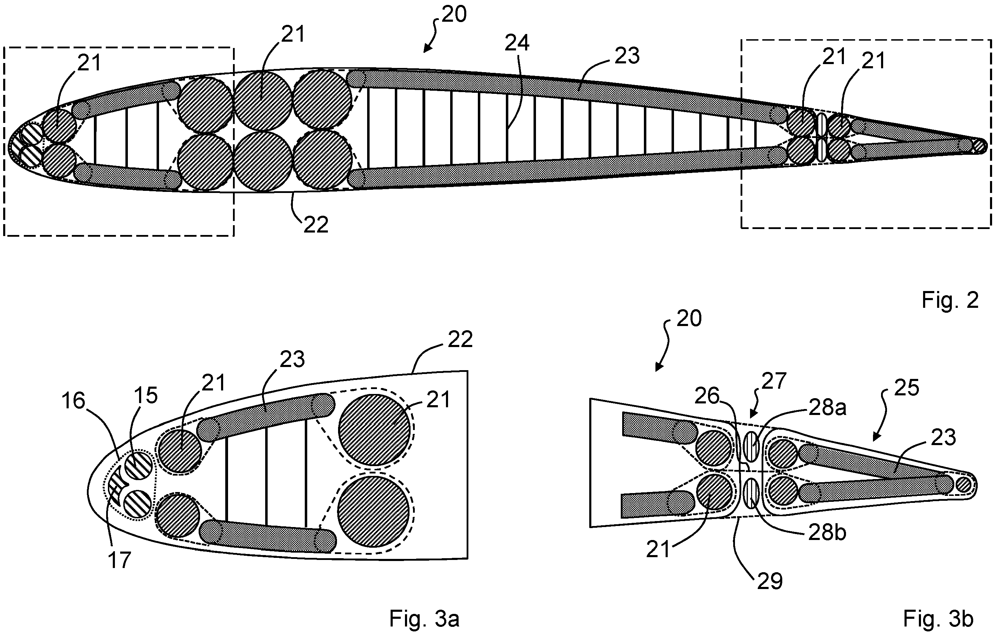

In Fig. 2 ist eine Flügelstruktur 20 im Querschnitt gezeigt. Diese umfasst eine Mehrzahl an Druckkammern 21, welche als Holm-Druckschläuche ausgestaltet sind und mit einem Druck von etwa $1{,}5 \times 10^7$ Pascal mit einer inkompressiblen Flüssigkeit gefüllt sind. Die Holm-Druckkammern 21 bilden die tragenden Elemente der Flügelstruktur 20. In Fig. 2 sind exemplarisch zwei Druckkammern 21 im vorderen Bereich, sechs Druckkammern 21 im mittleren Bereich und vier tragende Druckkammern

21 im hinteren Bereich der Flügelstruktur 20 dargestellt. Die gesamte Flügelstruktur 20 einschließlich der Druckkammern 21 ist von einer Außenhaut-Bespannung 22 umhüllt. Diese Außenhaut-Bespannung 22 dient als äußere Hülle der Flügelstruktur 20 und weist eine aerodynamische Güte auf. Sie erfüllt zudem die Funktion eines Spritzschutzes, beispielsweise im Falle einer platzenden Druckkammer 21. Die Außenhaut-Bespannung 22 ist zweckmäßigerweise aus einer reißfesten synthetischen Faser gefertigt, wie z. B. einem Aramid, wie Kevlar. Für die Formstabilität sind neben den Druckkammern 21, welche die Funktion eines Holmes übernehmen, zudem Rippen-Druckkammern 23 vorgesehen, die die Funktion von Rippen und Spanten in der Flügelstruktur 20 übernehmen. Diese Rippen-Druckkammern 23 sind ebenfalls mit einem Druck von etwa $1{,}5 \times 10^7$ Pascal mit einer inkompressiblen Flüssigkeit gefüllt. Für die zusätzliche Formstabilität des Profils weist die Flügelstruktur 20 zudem Spannfäden 24 auf. Diese zugfesten Spannfäden 24 sind in Längsrichtung eingespannt, um die Formstabilität des Profils zu gewährleisten.

In den Fig. 3a und Fig. 3b sind Detailansichten des vorderen bzw. hinteren Abschnitts der Flügelstruktur 20 im Querschnitt gezeigt. In Fig. 3a sind drei Nasen-Druckschläuche 15 gezeigt. Die beiden rund eingezeichneten Nasen-Druckschläuche 15 sind mit etwa $3 \times 10^5$ Pascal bis $5 \times 10^5$ Pascal gefüllt. Der Nasen-Druckschlauch 17 an der Spitze ist mit etwa $5 \times 10^4$ Pascal gefüllt. Sie dienen der Aufrechterhaltung der Profilform der Flügelstruktur 20. Zudem können diese zur Enteisung der Tragflügel verwendet werden, indem die mit Warmluft durchströmt werden. Um die Nasen-Druckschläuche 15 ist ein Netz 16 angebracht, welches zur Formstabilität der Profilform beiträgt. Das Netz 16 dient dazu, den Nasen-Druckschlauch 17 an der Flügelnase in Form zu halten. Im hinteren Abschnitt der Flügelstruktur 20 in Fig. 3b ist eine Flügelklappe 25 angebracht. Diese ist mittels Bänder 26 an dem hinteren Teil der Flügelstruktur 20 befestigt, derart, dass sich ein Spalt 27 ausbildet. In diesem Spalt 27 sind zwei Aktuator-Druckkammern 28a, 28b angebracht, wobei eine Aktuator-Druckkammer 28a oberhalb der Bänder 26 und eine Aktuator-Druckkammer 28b unterhalb der Bänder 26 angeordnet ist. Diese Aktuator-Druckkammern 28a, 28b sind mit niedrigem Druck von etwa $5 \times 10^4$ Pascal gefüllt. Sie bieten die Möglichkeit einer aufrollbaren Ansteuerung der Flügelklappe 25. Aufgrund der großen Fläche der Aktuator-Druckkammern 28a, 28b ist nur ein geringer Differenzdruck zwischen oberer und unterer Druckkammer zur Ansteuerung erforderlich. Der Spalt 27 sowie die Aktuator-Druckkammern 28a, 28b sind mit einer elastischen Hülle 29 umschlossen, welche als Spaltabdeckung dient und ebenfalls eine aerodynamische Güte aufweist.

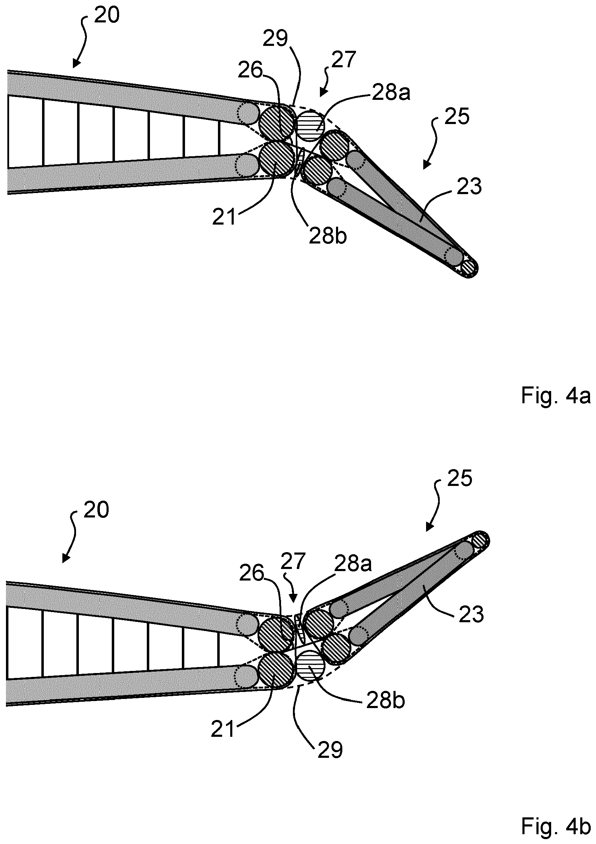

In den Fig. 4a und Fig. 4b sind schematische Darstellungen der Auslenkung der Steuerklappe 25 mit Aktuator-Druckkammern 28a, 28b gezeigt. Ausgelenkt wird die Steuerklappe 25 durch Umpumpen von Wasser von der einen auf die andere Seite, so dass z.B. bei einer Auslenkung nach unten der obere Schlauch 28a mehr Wasser enthält als der untere Schlauch, wie in Fig. 4a gezeigt. Aufgrund der hohen Zugfestigkeit des Befestigungsbandes 26 und der großen Kontaktfläche der Aktuator-Schläuche 28a, 28b können die erforderlichen Momente erzeugt werden.

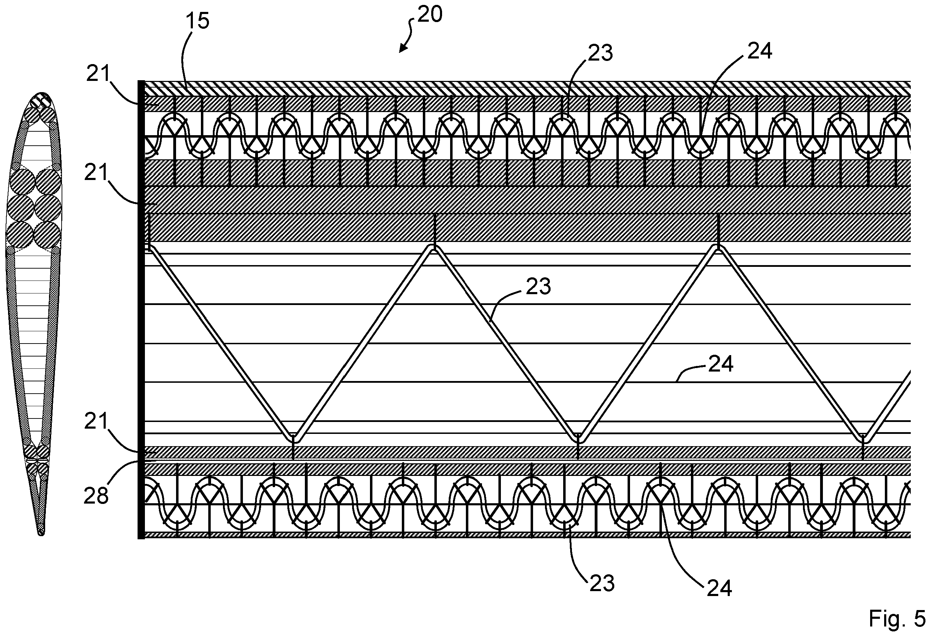

In Fig. 5 ist eine Draufsicht auf die Flügelstruktur 20 gezeigt. Die Nasen-Druckschläuche 15 verlaufen entlang der Vorderkante der Flügelstruktur 20. Die Druckkammern 21 verlaufen entlang der gesamten Längsachse der Flügelstruktur 20. Die Rippen-Druckschläuche 23 in der Mitte der Flügelstruktur 20 verlaufen in einem Zickzack-Muster mit einem Winkel von etwa 45° zur Längsachse der Flügelstruktur 20. Die Rippen-Druckschläuche 23, welche am vorderen und am hinteren Ende der Flügelstruktur positioniert sind, verlaufen mäanderförmig und werden abwechselnd an der oberen und an der unteren Holm-Druckkammer 21 befestigt. Die Spannfäden 24 in der Mitte der Flügelstruktur 20 verlaufen in Längsrichtung der Flügelstruktur 20 und dienen der Formstabilität der Druckschläuche, die die Rippen darstellen. Die Spannfäden 24, welche am vorderen und am hinteren Ende der Flügelstruktur positioniert sind, beschreiben eine Y-Form mit einem Winkel von 45° bzw. 90° zur Längsrichtung der Flügelstruktur 20. Sie dienen dazu, die Rippen-Druckschläuche 23 auch im befüllten Zustand unter hohem Druck in der dargestellten Form zu halten.

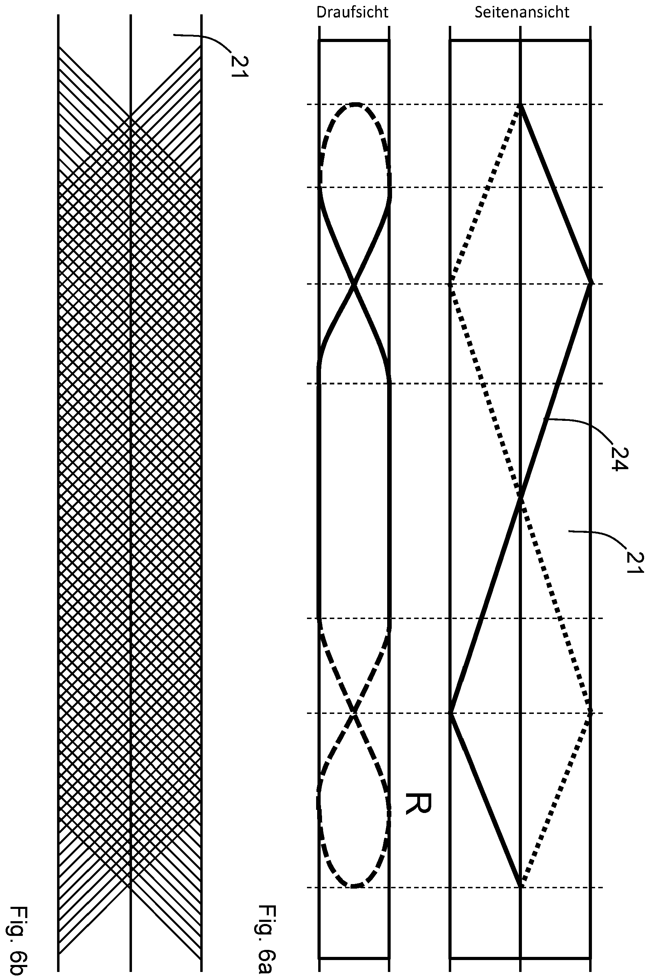

In Fig. 6a und Fig. 6b sind mögliche Verspannungen der Holm-Druckkammern 21 gezeigt. Die Holm-Druckkammer 21 ist hierbei am linken Ende fixiert, so dass das rechte Ende, insbesondere der Abschnitt R, das freie Ende darstellt. Eine erste Möglichkeit ist in Fig. 6a in einer Seitenansicht und dazugehörigen Draufsicht dargestellt. Hierbei werden separate Verspannungs-Fäden eingesetzt. Der mit einer durchgezogenen Linie dargestellte Spannfaden 24 im Abschnitt R in der Seitenansicht zeigt den Spannfaden 24 für die Belastung des rechten, freien Endes des Holmes nach unten. Der gestrichelt dargestellte Spannfaden im Abschnitt R in der Seitenansicht zeigt den analogen Verlauf des Spannfadens für die Belastung des rechten, freien Endes des Holmes nach oben. Eine zweite mögliche Ausgestaltung ist in Fig. 6b dargestellt. Die Geflecht-Umhüllung der Druckkammer 21 wird dabei aus Fäden gebildet, welche im 45°-Winkel zur Längsachse der Druckkammer 21 positioniert sind. Auf der Oberseite und der Unterseite sind diese durch eine Gummierung flexibel mit dem Druckschlauch 21 verbunden. Es ist vorteilhaft, jeweils zwei übereinanderliegende Schläuche nur abschnittsweise in aneinander anschließenden Segmenten mit Bändern zu verspannen (z.B. über die Länge eines Flügels etwa 10 Verspannungen wie in Fig. 6a gezeigt) oder mit einem 45° Gewebe zu umhüllen (wie in Fig. 6b). Bei dieser Verspannung ist es auch unerheblich, ob der Holm aus insgesamt vier, sechs oder mehr Schläuchen besteht, da sie immer nur paarweise verbunden sind.

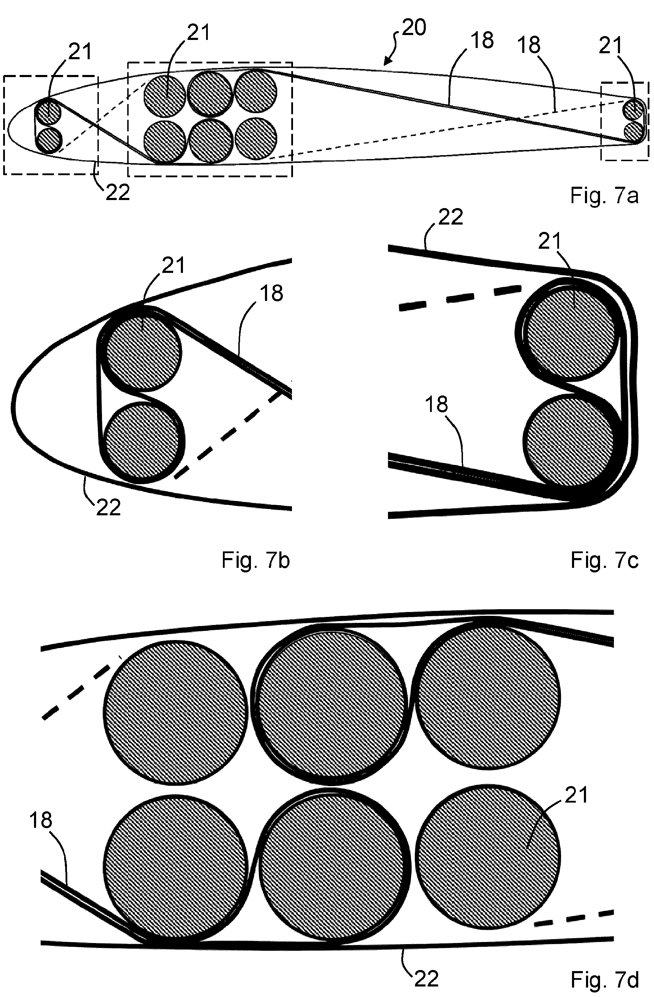

Die Fig. 7a-d zeigen schematische Darstellungen der Verspannung der Druckkammern 21 mit Zugbändern 18. Die Zugbänder 18 werden zur Erhöhung der Verwindungssteifigkeit der Flügelstruktur 20 verwendet. Die mit durchgezogenen Linien dargestellten Zugbänder 18 dienen der Aufnahme von rechtsdrehenden Momenten. Der Übersichtlichkeit halber ist die Lage der Zugbänder 18 zur Aufnahme von linksdrehenden Momenten durch gestrichelte Linien angedeutet. In Fig. 7a ist eine Übersicht der Flügelstruktur 20 gezeigt. Die Zugbänder 18 um die Druckkammern 21 im vorderen Bereich der Flügelstruktur 20 sind in Fig. 7b im Detail gezeigt. Die Zugbänder 18 verlaufen von rechts im Doppelstrang über die obere Druckkammer 21 entgegen dem Uhrzeigersinn. Der Doppelstrang der Zugbänder 18 teilt sich bei der unteren Druckkammer 21 auf, so dass ein Strang der Zugbänder 18 im Uhrzeigersinn und der zweite Strang entgegen dem Uhrzeigersinn um die untere Druckkammer 21 in Fig. 7b verläuft. Die Zugbänder 18 um die Druckkammern 21 im hinteren Bereich der Flügelstruktur 20 sind in Fig. 7c im Detail gezeigt. Die Zugbänder 18 verlaufen von links im Doppelstrang unter der unteren Druckkammer 21 entlang, entgegen dem Uhrzeigersinn. Der Doppelstrang der Zugbänder 18 teilt sich bei der oberen Druckkammer 21 auf, so dass ein Strang der Zugbänder 18 im Uhrzeigersinn und der zweite Strang entgegen dem Uhrzeigersinn um die obere Druckkammer 21 in Fig. 7c verläuft. Die Zugbänder 18 um die Druckkammern 21 im mittleren Bereich der Flügelstruktur 20 sind in Fig. 7d im Detail gezeigt. Die Zugbänder 18, welche von links von den vorderen Druckkammern 21 kommen, verlaufen im Doppelstrang unter der unteren linken Druckkammer 21 entlang. Der Doppelstrang der Zugbänder 18 teilt sich bei der mittleren unteren Druckkammer 21 auf, so dass ein Strang der Zugbänder 18 im Uhrzeigersinn und der zweite Strang entgegen dem Uhrzeigersinn um die mittlere untere Druckkammer 21 in Fig. 7d verläuft. Die Zugbänder 18, welche von rechts von den hinteren Druckkammern 21 kommen, verlaufen im Doppelstrang über der oberen rechten Druckkammer 21 entlang. Der Doppelstrang der Zugbänder 18 teilt sich bei der mittleren oberen Druckkammer 21 auf, so dass ein Strang der Zugbänder 18 im Uhrzeigersinn und der zweite Strang entgegen dem Uhrzeigersinn um die mittlere obere Druckkammer 21 in Fig. 7d verläuft.

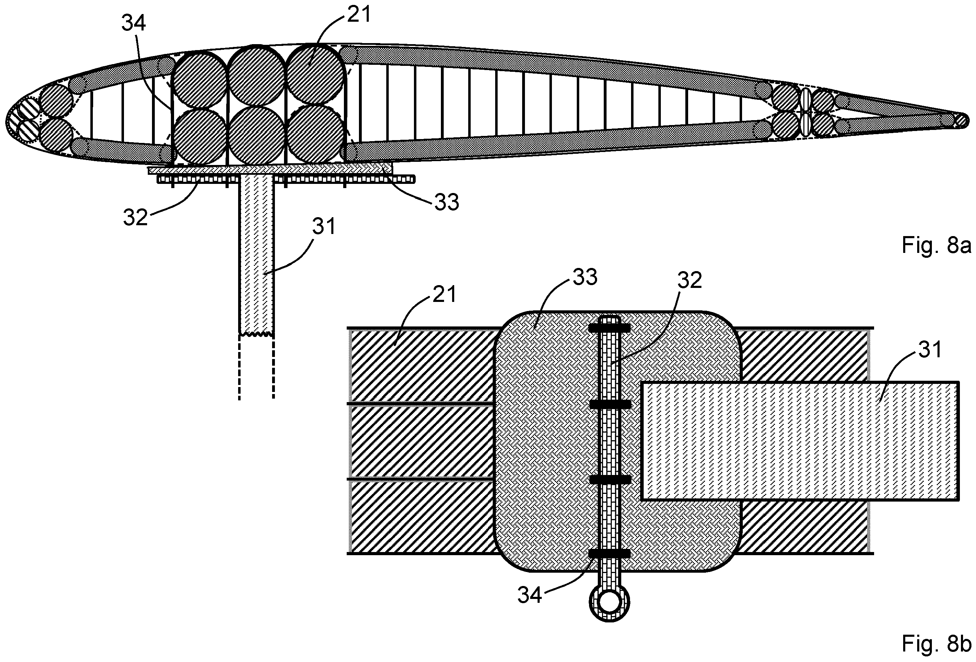

In den Fig. 8a und Fig. 8b sind schematische Darstellungen des Anschlusses der Flügelabstützung an der Flügelstruktur gezeigt. Die Flügelabstützung ist in Fig. 8a in einer Seitenansicht und in Fig. 8b in einer Ansicht von unten gezeigt. An den Druckkammern 21 in Fig. 8a sind Spannfäden 34 angebracht, welche U-förmig über zwei übereinanderliegende Druckschläuche 21 des Holmes gelegt sind und nach unten aus dem Flügelprofil herausragen. Diese Spannfäden 34 werden durch eine Druckplatte 33, welche als Flügelabstützung dient, geführt und anschließend mit einem Bolzen 32 gesichert. Der Bolzen 32 wird durch die Schlaufen der Spannfäden 34 geschoben, wenn die Holm-Druckschläuche 21 gefüllt, aber noch nicht unter maximalem Druck stehen. Die Ausdehnung der Druckschläuche 21 spannt die Spannfäden 34 der Aufnahme und sorgt für eine feste Verbindung mit der Druckplatte 33 der Flügelabstützung.

In einem Experiment sollte bestimmt werden, welche Momente ein realer Holm im Vergleich zum theoretischen Maximalwert aufnehmen kann. Hierfür wird das Verhältnis zwischen der maximalen Querkraft $F_{max,real}$ und dem theoretischen Wert $F_{max}$ bestimmt, für die gilt: $F_{max,real} = \varphi \cdot F_{max}$. Dieser Wert von $\varphi$ hängt insbesondere von der Dehnung der verwendeten Materialien unter Last ab. Es ist also kein allgemeingültiger Wert. Je zugfester die Fasern der Schläuche und Bänder sind, desto höher ist Wert von $\varphi$. Für eine erste Auslegungsrechnung ist es aber trotzdem wichtig, die Größenordnung dieses Faktors zu kennen. Darüber hinaus ist es möglich, dass der Holm einen unerwarteten Versagensmodus, wie z.B. ein seitliches Ausknicken, hat, weswegen es wichtig ist, einen Test im Original-Maßstab durchzuführen. Der Holm, der für den hier dokumentierten Versuch verwendet wurde, hat eine Länge von 4m.

Für die Versuche wurde als Druckschlauch der Schneekanonen-Zulaufschlauch GH Snowblast mit einem Innendurchmesser von 38 mm, einem Gewicht von 500 g/m, einer Wandstärke von 4 mm und einem Berstdruck von $1,5 \times 10^7$ Pascal verwendet. Bei eigenen Tests betrug der Berstdruck im Durchschnitt bis zu $1,65 \times 10^7$ Pascal. Für die Spannbänder wurde eine GOKU 2 Hybrid 2.5 cm Slack Mountain Slackline mit einer Breite von 25 mm, einer Dicke von 2 mm, einer Bruchdehnung von 40 kN, einer Dehnung von 3,8 % bei einer Zugkraft von 10 kN und einem Gewicht von 41 g/m verwendet. Die druckfesten Endabschlüsse der Schläuche bestehen aus in den Schlauch geschobenen Rohren. Diese sind mit zwei Rillen versehen für die über den Schlauch geschobenen Spannschellen. Auf einer Seite befindet sich ein Druckanschluss, die andere Seite ist mit einem Endabschluss geschlossen. Am freien Ende des Holms ist ein Endstück angebracht, das die vier Endabschlüsse der Schläuche fixiert und die Einspannung von Spannbändern, die in einem Winkel von 45° zur Achse des Druckschlauches verlaufen, aufweist. Um die Messung der Momente auf den Holm aufgrund des Gewichts des Holmendstücks nicht zu verfälschen, wird dessen Gewicht für die Messung mit einem Gegengewicht kompensiert. Auf der eingespannten Seite des Holms befinden sich die Druckanschlüsse und die Aufnahme der im 45°-Winkel angebrachten Spannbänder. Die an einer Tragfläche angreifenden Luftkräfte sind mit Ausnahme des Bereichs nahe der Flügelspitze konstant über die Spannweite. An einigen Kreuzungspunkten der im 45°-Winkel angebrachten Spannbänder sind Klemmen angebracht, die zur Formstabilität des Holms beitragen.

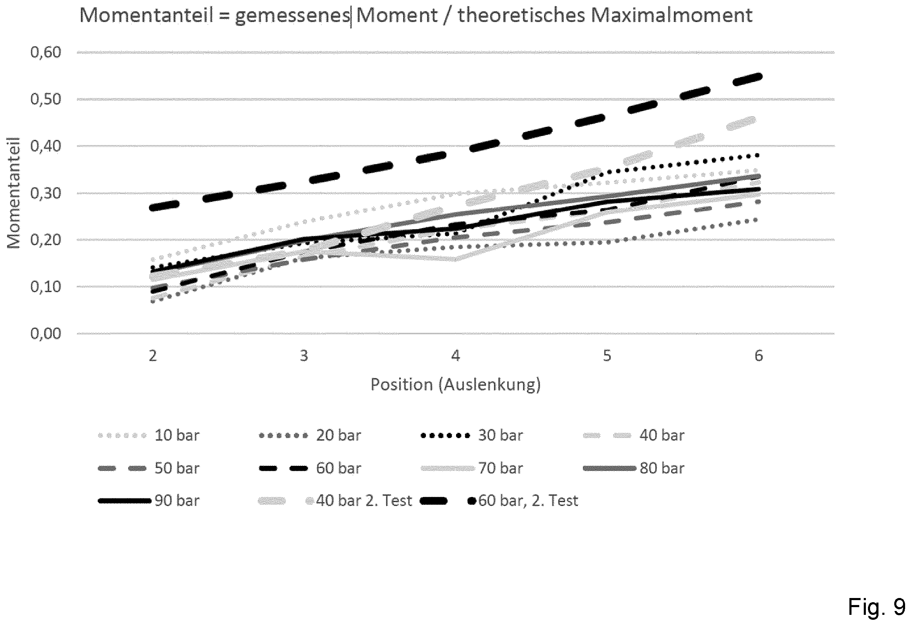

Gemessen wurde die Kraft, die benötigt wird, um den Holm um einen bestimmten Betrag auszulenken. Dazu wurde der Holm in festen Stufen von jeweils 5 cm in der Mitte des Holms ausgelenkt und dessen Gegenkraft bestimmt. Diese Kraft ist im Diagramm in Fig. 9 dargestellt. Die Kraft ist dabei in ein Moment um die feste Einspannung des Holms umgerechnet, bezogen auf das theoretisch mögliche, maximale Moment, bei vollständig entlasteten Bändern auf der Oberseite. Es wurden zwei Durchgänge gemessen mit unterschiedlicher Führung der lastaufnehmenden Bänder. Die beiden gestrichelten Kurven mit großer Strichstärke gehören zu der Anordnung, die sich als die beste herausgestellt hat. Die Kurven der ersten Messreihe (dünne Strichstärke), bei der einfach nur ein Band parallel zur Ober- bzw. Unterseite gespannt war, sind der Vollständigkeit halber ebenfalls dargestellt. Eine Erkenntnis aus der Messung ist, dass die Kraft, die der Balken aufnehmen kann, linear mit der Auslenkung steigt. Des Weiteren wird deutlich, dass die hier angewendete maximale Auslenkung noch nicht ausreichend ist, um die Maximalkraft zu erreichen, bei der die Spannbänder auf der Oberseite keine Zugkraft mehr aufnehmen. Ab diesem Wert würde die Kraft bzw. der Momentanteil bei weiterer Auslenkung nicht mehr ansteigen. Die Effizienz bzw. der Momentanteil ist offensichtlich nicht vom Druck abhängig, sondern nur von der Auslenkung. Der Absolutwert der Kraft, die der Holm tragen kann, ist jedoch direkt proportional zum Druck.

Aufgrund dieser Messergebnisse wird in den folgenden Auslegungsrechnungen ein Wert von $\varphi = 0,6$ angenommen, was einer Abschätzung des asymptotischen Maximalwertes der Kurve "60 bar, 2. Test" im Diagramm in Fig. 9 entspricht. Dieser Wert bedeutet somit, dass die Spannbänder auf der Oberseite in diesem Fall immer noch 20 % der Druckkraft des Wassers aufnehmen. Diese 20 % müssen von den Spannbändern der Unterseite kompensiert werden, so dass für die Lastaufnahme nur das Moment übrigbleibt, dass durch die Kompensation der verbleibenden 60 % der Druckkraft des Wassers von den unteren Spannbändern aufgenommen werden. Ein unerwarteter Versagensmodus, wie z.B. ein seitliches Ausknicken des Holms bei Auslenkung, trat bei der hier verwendeten Führung und Klemmung der Spannbänder nicht auf.

Für die Auslegung wird von einem Fahrzeuggewicht von 2200 kg ausgegangen. Dieser Wert enthält auch die Flügelstruktur, die für den Flugbetrieb nötig ist.

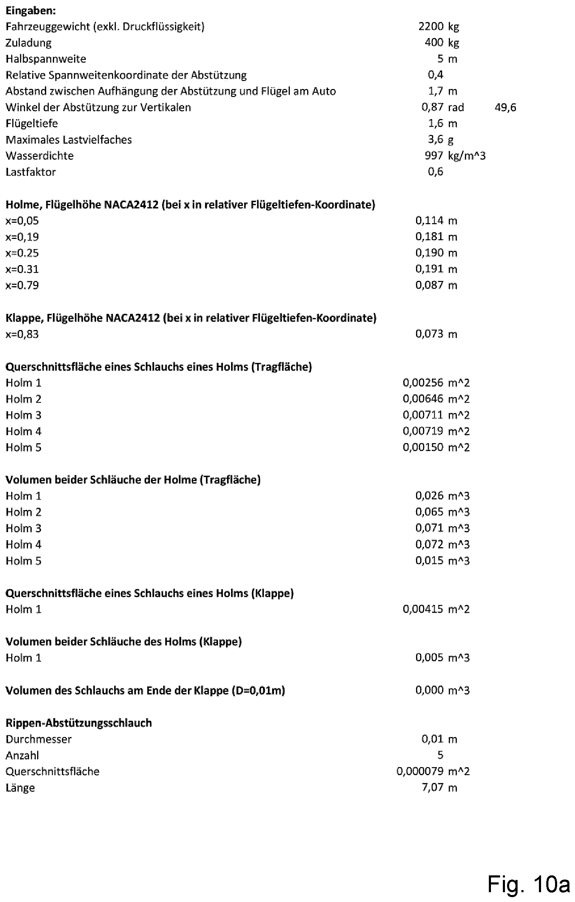

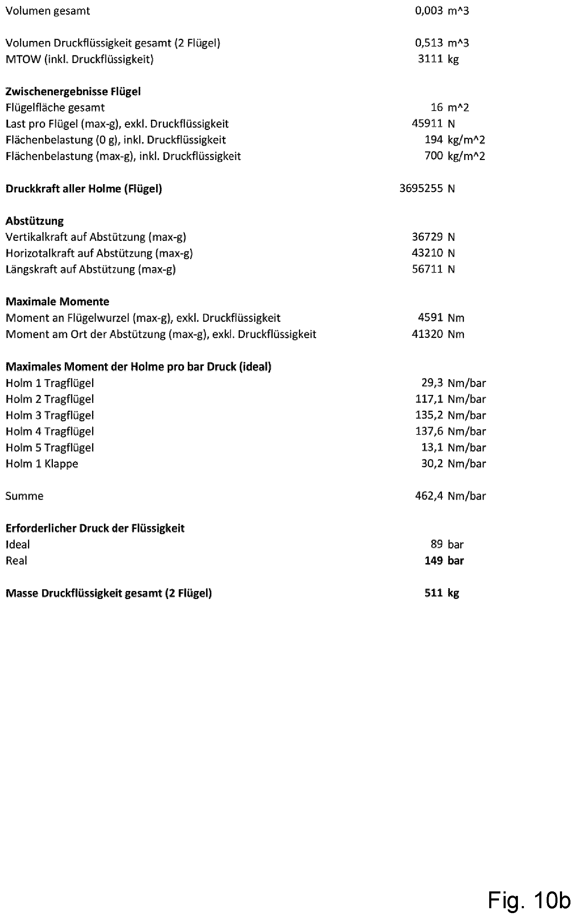

Bei der Auslegung der Flügelstruktur wird davon ausgegangen, dass eine Flügel-abstützung vorgesehen ist, wie dies bei Kleinflugzeugen üblich ist. Es wird das Endergebnis der Auslegungsrechnung in Fig. 10a-b gezeigt. Damit wird demonstriert, dass mit heute bereits verfügbaren Materialien eine Umsetzung des textilen Tragflügels für die beabsichtigte Verwendung möglich ist. Durch die Herstellung von speziell für diesen Anwendungszweck angepassten Schläuchen, z.B. mit einem abnehmenden Querschnitt über die Länge, kann die Wassermenge reduziert werden. Eine deutliche Reduktion der Wassermenge ist möglich, falls druckbeständigere Schläuche verwendet werden, wie z.B. durch Graphen-beschichtete Fasern. Dadurch sind geringere Schlauchquerschnitte nötig, was das Flügelgewicht im Flugzustand vorteilhafterweise erheblich reduziert.

## BEZUGSZEICHENLISTE

| | |
|---|---|
| 1 | Transportgerät |
| 10 | Flügelsystem (Tragflächensystem) |
| 15 | Nasen-Druckschlauch (rund) |
| 16 | Netz (um Nasen-Druckschlauch) |
| 17 | Nasen-Druckschlauch |
| 18 | Zugbänder |
| 20 | Flügelstruktur |
| 21 | Druckkammer (Holm) |
| 22 | Außenhaut-Bespannung |
| 23 | Rippen-Druckkammer |
| 24 | Spannfäden |
| 25 | Flügelklappe |
| 26 | Bänder |
| 27 | Spalt |
| 28 | Aktuator-Druckkammer |
| 29 | elastische Hülle |
| 30 | Stauraum |
| 31 | Flügel-Abstützung |
| 32 | Bolzen |
| 33 | Druckplatte (Flügelabstützung) |
| 34 | Spannfäden (Flügelabstützung) |
| 40 | Leitwerkträger |
| 41 | U-Profil |
| 42 | Segment |
| 43 | Schlitten |
| 44 | Träger |
| 45 | Aufnahme |
| 46 | Elektromotor (Montagehilfe) |
| 50 | Propeller |

## Patentansprüche

1. Flügelsystem (10), umfassend

> eine verstaubare, aerodynamische Flügelstruktur (20)
> mit mindestens einer druckdichten röhrenförmigen Druckkammer (21, 23) aus einem flexiblen Material, die sich vorzugsweise entlang der Spannweite der Flügelstruktur (20) erstreckt, und
> eine reißfeste Außenhaut-Bespannung (22), welche die Flügelstruktur (20) umhüllt, und
> ein Hochdruck-Pumpensystem,
> **dadurch gekennzeichnet, dass**
> die mindestens eine Druckkammer (21, 23) der Flügelstruktur (20) mit einer inkompressiblen Flüssigkeit befüllbar ist, wobei
> die inkompressible Flüssigkeit unter Hochdruck über $5{,}0\times10^6$ Pascal in der Druckkammer (21) gehalten wird.

2. Flügelsystem (10) gemäß Anspruch 1, **dadurch gekennzeichnet, dass,** die Flügelstruktur (20) aufrollbar und/oder faltbar ist.

3. Flügelsystem (10) gemäß Anspruch 1, **dadurch gekennzeichnet, dass,** die inkompressible Flüssigkeit unter Hochdruck über $1{,}0\times10^7$ Pascal oder über $1{,}5\times10^7$ Pascal in der Druckkammer (21) gehalten wird.

4. Flügelsystem (10) gemäß einem der vorherigen Ansprüche, **dadurch gekennzeichnet, dass,** das Flügelsystem (10) einen Stauraum (30) für die Flügelstruktur (20) umfasst, wobei die Flügelstruktur (20) im leeren Zustand im Stauraum (30) positionierbar ist, und die Flügelstruktur (20) im befüllten Zustand aus dem Stauraum (30) heraus in eine Tragflächenstellung positionierbar ist.

5. Flügelsystem (10) gemäß einem der vorherigen Ansprüche, **dadurch gekennzeichnet, dass** das Flügelsystem (10) eine Flügelklappe (25) umfasst, welche druckdichte röhrenförmige Druckkammern (21, 23) aus einem flexiblen Material umfasst, insbesondere wobei die Flügelklappe (25) mit zugfesten Bändern (26) an der Flügelstruktur (20) befestigt ist, wobei die Bänder (26) in Längsrichtung der Flügelstruktur (20) von der Hinterkante der Flügelstruktur (20) zur Vorderkante der Flügelklappe (25) verlaufen, insbesondere derart dass sich ein Spalt (27) zwischen der Hinterkante der Flügelstruktur (20) und der Vorderkante der Flügelklappe (25) bildet, wobei in diesem Spalt (27) parallel zur Hinterkante der Flügelstruktur (20) mindestens zwei Aktuator-Druckkammern (28a, 28b) angeordnet sind, insbesondere wobei mindestens eine Aktuator-Druckkammer (28a) oberhalb und mindestens eine Aktuator-Druckkammer (28b) unterhalb der Bänder (26) angeordnet ist.

6. Flügelsystem (10) gemäß einem der vorherigen Ansprüche, **dadurch gekennzeichnet, dass** das Flügelsystem (10) einen Leitwerkträger (40) umfasst, wobei der Leitwerkträger (40), insbesondere auf der Höhe der halben Tiefe der Flügelstruktur (20) drehbar gelagert ist, insbesondere wobei der Leitwerkträger (40) ein nach unten offenes U-Profil (41) aufweist, das in mehreren Segmenten (42), insbesondere in drei Segmenten (42), insbesondere teleskopartig, ineinander fahrbar ist, insbesondere wobei im U-Profil (41) ein Schlitten (43) in Längsrichtung verschiebbar eingebaut ist, wobei an dem Schlitten ein Träger (44) befestigbar ist, welcher durch eine Aufnahme (45) zur Spitze des Leitwerkträgers (40) hin führbar ist.

7. Flügelsystem (10) gemäß einem der vorherigen Ansprüche, **dadurch gekennzeichnet, dass** in eine erste, vorzugsweise röhrenförmige Druckkammer (21) eine zweite, vorzugsweise röhrenförmige Druckkammer (21) mit kleinerem Durchmesser koaxial zur ersten Druckkammer (21) eingebracht ist, insbesondere so dass in der zweiten Druckkammer (21) ein höherer Flüssigkeitsdruck als in der ersten Druckkammer (21) anliegt.

8. Flügelsystem (10) gemäß einem der vorherigen Ansprüche, **dadurch gekennzeichnet, dass** die Druckkammer (21, 23) röhrenförmig ist.

9. Flügelsystem (10) gemäß einem der vorherigen Ansprüche, **dadurch gekennzeichnet, dass** mehrere Druckkammern (21, 23) im befüllten Zustand nebeneinander und/oder übereinander verlaufend angeordnet sind.

10. Flügelsystem (10) gemäß einem der vorherigen Ansprüche, **dadurch gekennzeichnet, dass** die Druckkammern (21, 23) mittels Zugbänder (18, 26) gegeneinander verspannt sind.

11. Flügelsystem (10) gemäß einem der vorherigen Ansprüche, **dadurch gekennzeichnet, dass** die Druckkammern (21) quer zur Spannweite der Flügelstruktur (20) verlaufen und/oder die Druckkammern (23) mäanderförmig oder zickzackförmig in Richtung quer zur Spannweite entlang der Flügelstruktur (20) verlaufen.

12. Flügelsystem (10) gemäß einem der vorherigen Ansprüche, **dadurch gekennzeichnet, dass** zur Erhöhung der Formstabilität der Flügelstruktur Druckkammern (21, 23) über Spannfäden (24) miteinander verbunden sind.

13. Transportgerät (1), zur Verwendung als Fluggerät für die Fortbewegung in der Luft und als Fahrzeug für die Fortbewegung zu Lande, **dadurch gekennzeichnet, dass** das Transportgerät (1) ein Flügelsystem (10) gemäß einem der vorherigen Ansprüche umfasst, welches vorzugsweise auf der Oberseite des Transportgeräts (1) angebracht ist.

14. Transportgerät (1) gemäß Anspruch 13, **dadurch gekennzeichnet, dass** mindestens ein Behälter für die Flüssigkeit des Flügelsystems (10) in Bodennähe bezüglich des Untergrunds bei der Fortbewegung zu Lande, insbesondere in der dem Untergrund zugewandten Hälfte des Transportgeräts (1), angeordnet ist, vorzugsweise in der zum Flügelsystem (10) gegenüberliegenden Hälfte des Transportgeräts (1), wobei der mindestens eine Behälter zur Aufnahme der Flüssigkeit während des Betriebs als Fahrzeug für die Fortbewegung zu Lande hergerichtet ist und das Flügelsystem (10) zur Aufnahme der Flüssigkeit während des Betriebs als Fluggerät für die Fortbewegung in der Luft hergerichtet ist, sowie ein Pumpensystem umfasst, zum Pumpen der Flüssigkeit aus dem mindestens einen Behälter in das Flügelsystem (10).

15. Transportgerät (1) gemäß einem der vorherigen Ansprüche 13 bis 14, **dadurch gekennzeichnet, dass** das Transportgerät (1)

mindestens einen Elektromotor, vorzugsweise zur Fortbewegung, sowie
eine Redox-Flow Batterie als Energieträger umfasst, welche ein Elektrolyt umfasst, wobei der Elektrolyt in die mindestens eine Druckkammer (21, 23) der Flügelstruktur (20) des Flügelsystems (10) unter Hochdruck gemäß Anspruch 1 befüllbar ist.

16. Transportgerät (1) gemäß Anspruch 15, **dadurch gekennzeichnet, dass** der Elektrolyt aus einem Anolyt und einem Katholyt besteht, und das Transportgerät (1) mindestens zwei getrennte, vorzugsweise bodennahe Behälter sowie mindestens zwei Druckkammern (21, 23) im Flügelsystem (10) umfasst, wobei getrennte Flüssigkeitskreise für die Druckkammern (21, 23) vorgesehen sind, so dass für den Anolyt bzw. den Katholyt jeweils mindestens ein Behälter bzw. mindestens eine Druckkammer (21, 23) vorgesehen ist oder der Elektrolyt aus einem Anolyt besteht, und das Transportgerät (1) mindestens einen, vorzugsweise bodennahen Behälter sowie mindestens eine Druckkammer (21, 23) im Flügelsystem (10) umfasst.

17. Transportgerät (1) gemäß einem der Ansprüche 13 bis 16, **dadurch gekennzeichnet, dass** das die Flüssigkeit im Flüssigkeitskreis der Druckkammer (21, 23) zusätzlich als Kühlflüssigkeit innerhalb eines Kühlkreislaufes einbringbar ist, wobei die Flügelstruktur (20) als Wärmetauscher verwendbar ist.

**Claims**

1. Wing system (10) comprising

a stowable, aerodynamic wing structure (20) having at least one pressure-tight tubular pressure chamber (21, 23) made of a flexible material and preferably extending along the wingspan of the wing structure (20), and also comprising a tear-resistant outer skin covering (22), which envelops the wing structure (20), and further comprising a high-pressure pump system, **characterized in that** the at least one pressure chamber (21, 23) of the wing structure (20) can be filled with an incompressible fluid, wherein

the incompressible fluid is kept under high pressure of above $5.0 \times 10^6$ pascals in the pressure chamber (21).

2. Wing system (10) according to Claim 1, **characterized in that** the wing structure (20) can be rolled up and/or folded.

3. Wing system (10) according to Claim 1, **characterized in that** the incompressible fluid is kept under high pressure of above $1.0 \times 10^7$ pascals or above $1.5 \times 10^7$ pascals in the pressure chamber (21).

4. Wing system (10) according to one of the preceding claims, **characterized in that** the wing system (10) comprises a stowage space (30) for the wing structure (20), wherein, in the empty state, the wing structure (20) can be positioned in the stowage space (30) and, in the filled state, the wing structure (20) can be moved out of the stowage space (30) into an aerofoil position.

5. Wing system (10) according to one of the preceding claims, **characterized in that** the wing system (10) comprises a wing flap (25), which comprises pressure-tight tubular pressure chambers (21, 23) made of a flexible material, in particular wherein the wing flap (25) is fastened on the wing structure (20) by way of tension-resistant bands (26), wherein the bands (26) extend - as seen in the longitudinal direction of the wing structure (20) - from the rear edge of the wing structure (20) to the front edge of the wing flap (25), in particular in such a way that a gap (27) forms between the rear edge of the wing structure (20) and the front edge of the wing flap (25), wherein at least two actuator pressure chambers (28a, 28b) are arranged in this gap (27), parallel to the rear edge of the wing structure (20), in particular wherein at least one actuator pressure chamber (28a) is arranged above, and at least one actuator pressure chamber (28b) is arranged below, the bands (26).

6. Wing system (10) according to one of the preceding claims, **characterized in that** the wing system (10) comprises a tail boom (40), wherein the tail boom (40) is rotatably mounted in particular at the height of half the depth of the wing structure (20), in particular wherein the tail boom (40) has a downwardly open U profile (41), which in the form of a number of segments (42), in particular in the form of three segments (42), can be moved one inside the other, in particular telescopically, in particular wherein a carriage (43) is installed in the U profile (41), for displacement in the longitudinal direction, wherein a carrier (44) can be fastened on the carriage and can be guided in the direction of the tip of the tail boom (40) by way of a mount (45).

7. Wing system (10) according to one of the preceding claims, **characterized in that** a first, preferably tubular, pressure chamber (21) can have introduced into it, coaxially in relation to the first pressure chamber (21), a second, preferably tubular, pressure chamber (21) with a smaller diameter, in particular so that a higher fluid pressure is present in the second pressure chamber (21) than in the first pressure chamber (21).

8. Wing system (10) according to one of the preceding claims, **characterized in that** the pressure chamber (21, 23) is tubular.

9. Wing system (10) according to one of the preceding claims, **characterized in that**, in the filled state, a number of pressure chambers (21, 23) are arranged one beside the other and/or one above the other.

10. Wing system (10) according to one of the preceding claims, **characterized in that** the pressure chambers (21, 23) are braced in relation to one another by means of tensioning bands (18, 26).

11. Wing system (10) according to one of the preceding claims, **characterized in that** the pressure chambers (21) run transversely in relation to the wingspan of the wing structure (20) and/or the pressure chambers (23) run along the wing structure (20) in meandering or zigzag form in a direction transverse to the wingspan.

12. Wing system (10) according to one of the preceding claims, **characterized in that**, for the purpose of increasing the dimensional stability of the wing structure, pressure chambers (21, 23) are connected to one another by way of bracing threads (24).

13. Means of transportation (1) for use as an aircraft for travelling in the air and as a vehicle for travelling on land, **characterized in that** the means of transportation (1) comprises a wing system (10) according to one of the preceding claims, the wing system preferably being fitted on the upper side of the means of transportation (1).

14. Means of transportation (1) according to Claim 13, **characterized in that** at least one tank for the fluid of the wing system (10) is arranged in the vicinity of the ground - as seen in relation to the underlying surface during travel on land - in particular **in that** half of the means of transportation (1) which faces the underlying surface, preferably **in that** half of the means of transportation (1) which is located opposite the wing system (10), wherein the at least one tank is set up for receiving the fluid during operation as a vehicle for travelling on land, and the wing system (10) is set up for receiving the fluid during operation as an aircraft for travelling in the air and also comprises a pump system, for the purpose of pumping the fluid out of the at least one tank into the wing system (10).

15. Means of transportation (1) according to one of preceding Claims 13 and 14, **characterized in that** the means of transportation (1)

comprises at least one electric motor, preferably for travelling purposes, and
a redox flow battery, which forms an energy carrier and comprises an electrolyte, wherein the electrolyte can be filled into the at least one pressure chamber (21, 23) of the wing structure (20) of the wing system (10) under high pressure according to Claim 1.

16. Means of transportation (1) according to Claim 15, **characterized in that** the electrolyte consists of an anolyte and a catholyte, and the means of transportation (1) comprises at least two separate, preferably ground-vicinity, tanks and at least two pressure chambers (21, 23) in the wing system (10), wherein separate fluid circuits are provided for the pressure chambers (21, 23), so that in each case at least one tank and at least one pressure chamber (21, 23) are provided for the anolyte and the catholyte, or the electrolyte consists of an anolyte, and the means of transportation (1) comprises at least one, preferably ground-vicinity, tank and at least one pressure chamber (21, 23) in the wing system (10).

17. Means of transportation (1) according to one of Claims 13 to 16, **characterized in that** the fluid in the fluid circuit of the pressure chamber (21, 23) can additionally be introduced in the form of a cooling fluid within a cooling circuit, wherein the wing structure (20) can be used in the form of a heat exchanger.

**Revendications**

1. Système d'aile (10) comprenant

une structure d'aile aérodynamique (20) repliable, comprenant au moins une chambre de pression tubulaire (21, 23) étanche à la pression, en matériau flexible, qui s'étend de préférence le long de l'envergure de la structure d'aile (20), et
une enveloppe extérieure (22) résistante à la déchirure, qui recouvre la structure d'aile (20), et
un système de pompe haute pression,
**caractérisé en ce que**
ladite au moins une chambres de pression (21, 23) de la structure d'aile (20) est apte à être remplie d'un fluide incompressible,
le fluide incompressible étant maintenu sous haute pression supérieure à $5{,}0 \times 10^6$ Pascals dans la chambre de pression (21).

2. Système d'aile (10) selon la revendication 1, **caractérisé en ce que** la structure d'aile (20) est enroulable et/ou pliable.

3. Système d'aile (10) selon la revendication 1, **caractérisé en ce que** le fluide incompressible est maintenu sous haute pression supérieure à $1{,}0 \times 10^7$ Pascals ou supérieure à $1{,}5 \times 10^7$ Pascals dans la chambre de pression (21).

4. Système d'aile (10) selon l'une des revendications précédentes, **caractérisé en ce que** le système d'aile (10) comprend un espace de stockage (30) pour la structure d'aile (20), la structure d'aile (20) étant apte à être positionnée dans l'espace de stockage (30) lorsqu'elle est vide, et la structure d'aile (20) étant apte à être positionnée hors de l'espace de stockage (30) dans une position d'aile portante lorsqu'elle est remplie.

5. Système d'aile (10) selon l'une des revendications précédentes, **caractérisé en ce que** le système d'aile (10) comprend un volet d'aile (25) qui comprend des chambres de pression tubulaires (21, 23) étanches à la pression en matériau flexible, le volet (25) étant en particulier fixé à la structure d'aile (20) par des bandes de traction bandes (26) résistantes à la traction, les bandes (26) s'étendant dans la direction longitudinale de la structure d'aile (20), depuis le bord arrière de la structure d'aile (20) jusqu'au bord avant du volet (25), de telle sorte qu'un espace (27) soit formé entre le bord arrière de la structure d'aile (20) et le bord avant du volet d'aile (25), au moins deux chambres de pression d'actionneur (28a, 28b) étant agencées dans cet espace (27) parallèlement au bord arrière de la structure d'aile (20), parallèlement au bord arrière de la structure d'aile (20), en particulier au moins une chambre de pression d'actionneur (28a) étant agencée au-dessus et au moins une chambre de pression d'actionneur (28b) étant agencée en dessous des bandes (26).

6. Système d'aile (10) selon l'une des revendications précédentes, **caractérisé en ce que** le système d'aile (10) comprend un support (40) d'empennage, le support (40) d'empennage étant monté de manière rotative, en particulier à la hauteur de la moitié de la profondeur de la structure d'aile (20), le support (40) d'empennage présentant en particulier un profilé en U (41) ouvert vers le bas, qui est apte à être emboîté en plusieurs segments (42), en particulier en trois segments (42), en particulier de manière télescopique, un chariot (43) étant en particulier monté dans le profilé en U (41) de manière à être apte à coulisser dans la direction longitudinale, un support (44) étant apte à être fixé sur le chariot, lequel est apte à être guidé vers la pointe du support d'empennage (40) par un logement (45).

7. Système d'aile (10) selon l'une des revendications précédentes, **caractérisé en ce qu'**une deuxième chambre de pression (21), de préférence tubulaire, de plus petit diamètre, est introduite dans une première chambre de pression (21) coaxialement à la première chambre de pression (21), notamment de manière à ce que, dans la deuxième chambre de pression (21), s'applique une pression de liquide plus élevée que dans la première chambre de pression (21).

8. Système d'aile (10) selon l'une des revendications précédentes, **caractérisé en ce que** la chambre de pression (21, 23) est tubulaire.

9. Système d'aile (10) selon l'une des revendications précédentes, **caractérisé en ce que** plusieurs chambres de pression (21, 23) sont agencées côte à côte et/ou les unes au-dessus des autres lorsqu'elles sont remplies.

10. Système d'aile (10) selon l'une des revendications précédentes, **caractérisé en ce que** les chambres de pression (21, 23) sont serrées les unes contre les autres au moyen de bandes de tension (18, 26).

11. Système d'aile (10) selon l'une des revendications précédentes, **caractérisé en ce que** les chambres de pression (21) s'étendent transversalement à l'envergure de la structure d'aile (20) et/ou les chambres de pression (23) s'étendent en forme de méandre ou en zigzag dans la direction transversale à l'envergure le long de la structure d'aile (20).

12. Système d'aile (10) selon l'une des revendications précédentes, **caractérisé en ce que**, pour augmenter la stabilité de forme de la structure d'aile, les chambres de pression (21, 23) sont reliées entre elles par des fils de tension (24).

13. Appareil de transport (1) destiné à être utilisé comme aéronef pour se déplacer dans les airs et comme véhicule pour se déplacer sur terre, **caractérisé en ce que** l'appareil de transport (1) comprend un système d'aile (10) selon l'une des revendications précédentes, qui est de préférence monté sur la face supérieure de l'appareil de transport (1).

14. Appareil de transport (1) selon la revendication 13, **caractérisé en ce qu'**au moins un réservoir pour le fluide du système d'aile (10) est agencé près du sol par rapport au fond lors du déplacement sur terre, en particulier dans la moitié de l'appareil de transport (1) tournée vers le fond, de préférence dans la moitié de l'appareil de transport (1) opposée au système d'aile (10), ledit au moins un réservoir destiné à recevoir le fluide étant conçu pour servir de véhicule pour le déplacement terrestre pendant le fonctionnement et le système d'aile (10) étant conçu pour servir d'appareil volant pour le déplacement dans les airs pendant le fonctionnement, et comprenant un système de pompage pour pomper le fluide depuis ledit au moins un réservoir dans le système d'aile (10) .

15. Appareil de transport (1) selon l'une des revendications 13 à 14 précédentes, **caractérisé en ce que** l'appareil de transport (1)

comprend au moins un moteur électrique, de préférence pour le déplacement, ainsi qu' une batterie redox à flux continu comme source d'énergie, qui comprend un électrolyte, l'électrolyte étant apte à être rempli sous haute pression dans ladite au moins une chambres de pression (21, 23) de la structure d'aile (20) du système d'aile (10) selon la revendication 1.

16. Appareil de transport (1) selon la revendication 15, **caractérisé en ce que** l'électrolyte est constitué d'un anolyte et d'un catholyte, et **en ce que** l'appareil de transport (1) comprend au moins deux réservoirs séparés, de préférence proches du sol, ainsi qu'au moins deux chambres de pression (21, 23) dans le système d'aile (10), des circuits de fluide séparés étant prévus pour les chambres de pression (21, 23), de sorte qu'au moins un récipient ou au moins une chambre de pression (21, 23) est prévu(e) pour l'anolyte ou le catholyte, ou l'électrolyte est constitué d'un anolyte, et l'appareil de transport (1) comprend au moins un réservoir, de préférence proche du sol, ainsi qu'au moins une chambre de pression (21, 23) dans le système d'aile (10).

17. Appareil de transport (1) selon l'une des revendications 13 à 16, **caractérisé en ce que** le fluide dans le circuit de fluide de la chambre de pression (21, 23) est apte à en outre être introduit en tant que fluide de refroidissement dans un circuit de refroidissement, la structure d'aile (20) étant apte à être utilisée en tant qu'échangeur de chaleur.

Fig. 1a

Fig. 1b

Fig. 1c

Fig. 1d

Fig. 1e

Fig. 1f

Fig. 1h

Fig. 1g

Fig. 3a

Fig. 3b

Fig. 2

Fig. 4a

Fig. 4b

Fig. 5

Fig. 6b

21

Fig. 6a

Draufsicht

R

Seitenansicht

21

24

Fig. 7a

Fig. 7b

Fig. 7c

Fig. 7d

Fig. 8a

Fig. 8b

Fig. 9

**Eingaben:**

| | | |
|---|---|---|
| Fahrzeuggewicht (exkl. Druckflüssigkeit) | 2200 | kg |
| Zuladung | 400 | kg |
| Halbspannweite | 5 | m |
| Relative Spannweitenkoordinate der Abstützung | 0,4 | |
| Abstand zwischen Aufhängung der Abstützung und Flügel am Auto | 1,7 | m |
| Winkel der Abstützung zur Vertikalen | 0,87 | rad 49,6 |
| Flügeltiefe | 1,6 | m |
| Maximales Lastvielfaches | 3,6 | g |
| Wasserdichte | 997 | kg/m^3 |
| Lastfaktor | 0,6 | |

**Holme, Flügelhöhe NACA2412 (bei x in relativer Flügeltiefen-Koordinate)**

| | |
|---|---|
| x=0,05 | 0,114 m |
| x=0,19 | 0,181 m |
| x=0.25 | 0,190 m |
| x=0.31 | 0,191 m |
| x=0.79 | 0,087 m |

**Klappe, Flügelhöhe NACA2412 (bei x in relativer Flügeltiefen-Koordinate)**

| | |
|---|---|
| x=0,83 | 0,073 m |

**Querschnittsfläche eines Schlauchs eines Holms (Tragfläche)**

| | |
|---|---|
| Holm 1 | 0,00256 m^2 |
| Holm 2 | 0,00646 m^2 |
| Holm 3 | 0,00711 m^2 |
| Holm 4 | 0,00719 m^2 |
| Holm 5 | 0,00150 m^2 |

**Volumen beider Schläuche der Holme (Tragfläche)**

| | |
|---|---|
| Holm 1 | 0,026 m^3 |
| Holm 2 | 0,065 m^3 |
| Holm 3 | 0,071 m^3 |
| Holm 4 | 0,072 m^3 |
| Holm 5 | 0,015 m^3 |

**Querschnittsfläche eines Schlauchs eines Holms (Klappe)**

| | |
|---|---|
| Holm 1 | 0,00415 m^2 |

**Volumen beider Schläuche des Holms (Klappe)**

| | |
|---|---|
| Holm 1 | 0,005 m^3 |

**Volumen des Schlauchs am Ende der Klappe (D=0,01m)**   0,000 m^3

**Rippen-Abstützungsschlauch**

| | |
|---|---|
| Durchmesser | 0,01 m |
| Anzahl | 5 |
| Querschnittsfläche | 0,000079 m^2 |
| Länge | 7,07 m |

Fig. 10a

| | |
|---|---|
| Volumen gesamt | 0,003 m^3 |
| Volumen Druckflüssigkeit gesamt (2 Flügel) | 0,513 m^3 |
| MTOW (inkl. Druckflüssigkeit) | 3111 kg |

**Zwischenergebnisse Flügel**

| | |
|---|---|
| Flügelfläche gesamt | 16 m^2 |
| Last pro Flügel (max-g), exkl. Druckflüssigkeit | 45911 N |
| Flächenbelastung (0 g), inkl. Druckflüssigkeit | 194 kg/m^2 |
| Flächenbelastung (max-g), inkl. Druckflüssigkeit | 700 kg/m^2 |

**Druckkraft aller Holme (Flügel)**      3695255 N

**Abstützung**

| | |
|---|---|
| Vertikalkraft auf Abstützung (max-g) | 36729 N |
| Horizotalkraft auf Abstützung (max-g) | 43210 N |
| Längskraft auf Abstützung (max-g) | 56711 N |

**Maximale Momente**

| | |
|---|---|
| Moment an Flügelwurzel (max-g), exkl. Druckflüssigkeit | 4591 Nm |
| Moment am Ort der Abstützung (max-g), exkl. Druckflüssigkeit | 41320 Nm |

**Maximales Moment der Holme pro bar Druck (ideal)**

| | |
|---|---|
| Holm 1 Tragflügel | 29,3 Nm/bar |
| Holm 2 Tragflügel | 117,1 Nm/bar |
| Holm 3 Tragflügel | 135,2 Nm/bar |
| Holm 4 Tragflügel | 137,6 Nm/bar |
| Holm 5 Tragflügel | 13,1 Nm/bar |
| Holm 1 Klappe | 30,2 Nm/bar |
| | |
| Summe | 462,4 Nm/bar |

**Erforderlicher Druck der Flüssigkeit**

| | |
|---|---|
| Ideal | 89 bar |
| Real | **149 bar** |

**Masse Druckflüssigkeit gesamt (2 Flügel)**      **511 kg**

Fig. 10b

**IN DER BESCHREIBUNG AUFGEFÜHRTE DOKUMENTE**

**In der Beschreibung aufgeführte Patentdokumente**

- US 4725021 A
- WO 002017076498 A1
- CN 1847089 A
- US 10676172 B1
- US 3473761 A
- US 20060060706 A1
- US 6508036 B1
- DE 19907791 A1
- CN 206231175 U
- US 2020010209 A1